# EUROPÄISCHE PATENTSCHRIFT

(11) **EP 1 155 303 B1**
(45) Veröffentlichungstag und Bekanntmachung des Hinweises auf die Patenterteilung: **10.11.2004**
(21) Anmeldenummer: 00910616.2
(22) Anmeldetag: 26.01.2000
(51) Int. Cl.: G01N 15/14

(54) **VERFAHREN UND VORRICHTUNG ZUR DETEKTION MIKROSKOPISCH KLEINER OBJEKTE**
METHOD AND DEVICE FOR DETECTING MICROSCOPIC OBJECTS
PROCEDE ET DISPOSITIF POUR LA DETECTION D'OBJETS MICROSCOPIQUES

(30) Priorität: 26.01.1999 DE 19903001
(43) Veröffentlichungstag der Anmeldung: 21.11.2001
(73) Patentinhaber: Evotec Technologies GmbH, 40225 Düsseldorf (DE)
(72) Erfinder: FUHR, Günter, D-13187 Berlin (DE); SCHNELLE, Thomas, D-10243 Berlin (DE); REICHLE, Christoph, D-13353 Berlin (DE); GLASSER, Henning, D-10245 Berlin (DE); MÜLLER, Torsten, D-12439 Berlin (DE); GRADL, Gabriele, D-13503 Berlin (DE)
(74) Vertreter: Hertz, Oliver, Dr.
(86) Internationale Anmeldenummer: PCT/EP2000/000621
(87) Internationale Veröffentlichungsnummer: WO 2000/045147

(56) Entgegenhaltungen:
- WO-A-98/29732
- US-A- 5 684 587

## Beschreibung

Die Erfindung betrifft ein Verfahren und eine Vorrichtung zur Detektion mikroskopisch kleiner Objekte, insbesondere zur Erfassung der Präsenz und/oder zur Messung des Ortes bzw. der Ortsänderung der Objekte, beispielsweise in fluidischen Mikrosystemen. Die mikroskopisch kleinen Objekte sind insbesondere synthetische oder biologische Teilchen, die in einem fluidischen Mikrosystem manipuliert werden. Die Erfindung betrifft auch Verwendungen des Verfahrens bzw. der Vorrichtung, insbesondere zur Objektdetektion in Abhängigkeit von mechanischen, elektrischen oder chemischen Wechselwirkungen der Objekte mit ihrer Umgebung oder anderen Objekten.

Es ist allgemein bekannt, fluidische Mikrosysteme zur teilchenspezifischen Manipulierung mikroskopisch kleiner Objekte unter der Wirkung hydrodynamischer und/oder elektrischer Kräfte zu verwenden. Die Manipulierung biologischer Teilchen in Mikrosystemen mit hochfrequenten elektrischen Feldern auf der Grundlage negativer Dielektrophorese wird beispielsweise von G. Fuhr et al. in "Naturwissenschaften", Bd. 81, 1994, S. 528 ff., beschrieben. Die Manipulierung der Objekte umfaßt u.a. eine Sortierung nach bestimmten Eigenschaften, eine Objektveränderung unter Wirkung elektrischer Felder (z.B. Zellporation), eine chemische Behandlung, eine gegenseitige Zusammenführung und Wechselwirkung der Objekte und dergl. Die Bereitstellung vorbestimmter hydrodynamischer und/oder elektrischer Kräfte erfolgt durch die Gestaltung der Kanalstruktur des Mikrosystems bzw. die geometrische Form von Mikroelektroden zur Ausbildung hochfrequenter elektrischer Felder und deren Ansteuerung.

Die bisher bekannten Mikrosysteme erlauben zwar eine Kontrolle der jeweiligen Objektmanipulierung mit optischen Mitteln, z.B. unter Verwendung eines Mikroskops mit einer Kamera. Diese optische Kontrolle ist jedoch bisher auf visuelle Überprüfungen oder den Einsatz aufwendiger Bilderkennungsverfahren zur Bearbeitung der Kamerabildes beschränkt. Die Bildverarbeitungsverfahren sind jedoch, soll eine Echtzeit-Kontrolle ausgeübt werden, für die auftretenden Objektgeschwindigkeiten erheblich zu langsam. Dadurch ist bisher die Implementierung automatischer Systemregelungen, bei denen beispielsweise bestimmte Verfahrensverläufe in Abhängigkeit von Ort, Bewegungszustand oder Anzahl beobachteter Objekte erfolgen, ausgeschlossen.

Aus der PCT/EP97/07218 ist ein Verfahren zur Bewegungserfassung an mikroskopischen Objekten bekannt, die eine zumindest teilweise periodische Bewegung ausführen. Dieses Verfahren basiert auf der Anwendung einer Fourier-Analyse eines Detektorsignals, das die Objektbewegung über eine Vielzahl von Bewegungsperioden charakterisiert. Dieses Verfahren stellt eine erhebliche Vereinfachung gegenüber der Anwendung von computergestützten Bildverarbeitungsverfahren dar, ist jedoch in der Anwendung auf periodische Bewegungen beschränkt. Im allgemeinen treten in einem Mikrosystem jedoch auch nicht-periodische Bewegungen oder Ruhezustände der Objekte auf, an deren Detektion insbesondere zur automatischen Steuerung eines Mikrosystems ein Interesse besteht.

Es ist auch bekannt, die Präsenz von kleinen Teilchen in Suspensionen auf der Basis von Streulichtmessungen zu erfassen. Dieses Prinzip läßt sich jedoch nur bei einer Vielzahl von Teilchen und somit teilchenunspezifisch realisieren. Außerdem lassen sich keine Angaben über den Bewegungszustand von Teilchen (Ort, Geschwindigkeit oder dgl.) ableiten.

Es ist die Aufgabe der Erfindung ein verbessertes Verfahren zur Objektdetektion anzugeben, das auf beliebige Bewegungs- oder Ruhezustände der zu erfassenden Objekte anwendbar ist und eine schnelle und sichere Signalauswertung ermöglicht. Die Aufgabe der Erfindung ist es auch, Vorrichtungen zur Implementierung eines derartigen Verfahrens und neue Verwendungen der erfindungsgemäßen Objektdetektion anzugeben.

Diese Aufgaben werden durch ein Verfahren und eine Vorrichtung mit den Merkmalen gemäß den Ansprüchen 1 bzw. 10 gelöst. Vorteilhafte Ausführungsformen und Verwendungen der Erfindung ergeben sich aus den abhängigen Ansprüchen.

Der Erfindung liegt die Idee zugrunde, den Aufenthaltsbereich (Bewegungsbahn oder Position) des zu detektierenden Objekts vergrößert auf eine Maske abzubilden, die in mindestens einem Segment zur Übertragung (Reflexion oder Transmission) des Lichtes von einem Teil des Aufenthaltsbereiches (sogenannter Teilbereich) eingerichtet ist und im übrigen außerhalb des Segments eine Übertragung unterbindet. Das mindestens eine lichtübertragende Segment der Maske besitzt eine charakteristische Dimension, die kleiner als die Abbildung des Gesamtobjekts oder als die laterale Ausdehnung der Bewegungsbahn des Objekts ist. Die von der Maske übertragene Lichtmenge der Objektabbildung wird summarisch auf eine Detektoreinrichtung abgebildet, an der ein Detektorsignal erzeugt wird, das in einem vorbestimmten Zusammenhang mit der detektierten Lichtmenge steht und eine Auswertung in Bezug auf die Präsenz (Vorhandensein) eines Objekts, dessen Position und/oder die zeitliche Änderung der Position erlaubt. Durch die maskierte Abbildung eines Teilbereichs des Objekts und/oder der Objektbahn wird die von der Detektoreinrichtung erfaßte Lichtmenge in charakteristischer Weise moduliert. Die Zeitabhängigkeit des Detektorsignals, insbesondere die zeitliche Lage von Signalmaxima, die Amplituden der Signalmaxima und der zeitliche Amplitudenverlauf in Umgebung der Signalmaxima, liefert nicht nur Angaben über den Ort und die Geschwindgkeit der Objekte, sondern auch über abgeleitete Größen wie beispielsweise die Frequenz periodischer Bewegungen, quantitative Angaben zu Teilchenzahlen, die Bewegungsrichtung, die Zentrierung in Mikrosystemen oder dergleichen.

Gegenstand der Erfindung ist somit insbesondere die Objektdetektion auf der Grundlage eines Blenden-Meßprinzips, bei dem eine summarische Lichtmengendetektion des von einem Teilbereich des Objekts oder der Objektbahn ausgehenden Lichts erfolgt. Dementsprechend kann die Objektteilabbildung grundsätzlich auf eine Blende geeigneter Dimensionierung erfolgen. Im einfachsten Falle besteht die Maske aus einem lichtundurchlässigen Element mit einer runden oder eckigen Öffnung, die zur Realisierung der erfindungsgemäßen Teilabbildung des zu detektierenden Objekts geeignet dimensioniert ist.

Entsprechend bevorzugten Ausführungsformen der Erfindung besitzt jedoch die Maske eine Segmentierung mit einer vorbestimmten Geometrie. Das mindestens eine Segment zur Übertragung des Lichtes der Teilabbildung besitzt eine geometrische Form, die anwendungsabhängig je nach den an der jeweiligen Meßstelle erwarteten Objektbewegungen (z.B. Translation, Rotation, translatorische Vibration, rotatorische Vibration oder dgl.) ausgewählt ist.

Erfindungsgemäß ist eine vergrößerte Abbildung des Aufenthaltsbereichs der zu detektierenden Objekte (z.B. in einem Mikrosystem) auf die Maske vorgesehen. Damit kann die Segmentierung der Maske, die zwar zur Übertragung des Lichts von einer Teilabbildung eingerichtet ist, absolut größer als der betreffende Teilbereich oder des Teils des Objekts sein.

Dies ist für die Herstellung und Justierung der Maske von Vorteil.

Bevorzugte Anwendungen der erfindungsgemäßen Objektdetektion sind in den fluidischen Mikrosystemen insbesondere bei der automatischen Reglung von Systemfunktionen, bei der dielektrischen Einzelteilchenspektroskopie und bei der Untersuchung von Wechselwirkungen zwischen Objekten und anderen Objekten und/oder Substraten gegeben. Erfindungsgemäß detektierte Objekte besitzen charakteristische Durchmesser im Bereich unterhalb 500 µm bis in den 100 nm-Bereich und umfassen synthetische oder biologische Teilchen (oder Teilchenaggregate). Die synthetischen Teilchen sind beispielsweise membranumhüllte Gebilde, wie Liposomen oder Vesikeln, oder Kunststoffpartikel (sogenannte Beads). Die biologischen Teilchen sind biologische Zellen oder Zellaggregate oder Zellbestandteile, Mikroorganismen, Viren oder dergleichen.

Gegenstand der Erfindung ist auch eine Vorrichtung zur Implementierung der erfindungsgemäßen Objektdetektion, umfassend eine optische Abbildungseinrichtung zur Abbildung eines Teils eines zu erfassenden Objekts (oder von dessen Bahn) über eine Maske auf eine Detektoreinrichtung, die ein Detektorsignal in bestimmtem Zusammenhang mit der erfaßten Lichtmenge erzeugt, und eine Auswertungseinrichtung zur Ermittlung von Eigenschaften des Bewegungs- oder Ruhezustandes des Objekts. Die Abbildungseinrichtung enthält insbesondere die Maske, auf die das Objekt oder dessen Bewegungsbahn vergrößert abgebildet wird und die nur einen Teilbereich der Abbildung an die Detektoreinrichtung überträgt. Gemäß einer bevorzugten und unten im einzelnen erläuterten Ausführungsform der Erfindung ist die Maske eine Blende mit einer vorbestimmten Transmissionsgeometrie. Die Erfindung ist jedoch nicht auf diese Gestaltung beschränkt, sondern auch mit anderen Maskengestaltungen implementierbar, die für die Erfüllung derselben Funktion wie die transmittierende Blende eingerichtet sind. Als Maske kann anstelle eines lichtdurchlässigen Segments in einem lichtundurchlässigen Maskenmaterial auch ein lichtundurchlässiges Segment (mit derselben Geometrie wie das zuvor genannte lichtdurchlässige Segment) in einer im übrigen lichtdurchlässigen Umgebung verwendet werden. Entsprechend ist auch anstelle des Transmissions- ein Reflexionsprinzip realisierbar.

Die Abbildungseinrichtung ist vorzugsweise Teil einer an sich bekannten Mikroskopanordnung, die im Strahlengang die Maske zur Erzeugung der Teilabbildung enthält. Damit kann simultan zur Objektdetektion eine visuelle Objektbeobachtung stattfinden. Die Kombination mit der Mikroskopanordnung ist jedoch nicht zwingend erforderlich. Insbesondere für automatisierte Anwendungen kann die Abbildungseinrichtung unmittelbar an einem Mikrosystem vorgesehen sein.

Die Erfindung besitzt die folgenden Vorteile. Die erfindungsgemäße Objektdetektion erfordert keine meß- und zeitaufwendigen Bildverarbeitungsverfahren. Sie ermöglicht eine hochgenaue Messung mit an sich verfügbaren Abbildungs- und Meßeinrichtungen. Ein bestehender Mikroskopaufbau kann ohne weiteres durch Anbringung der genannten Maske für die erfindungsgemäße Objektdetektion eingerichtet werden. Die erfindungsgemäße Maskensegmentierung erlaubt eine Objektdetektion ohne großen Justieraufwand. Die Objektdetektion ist einfach automatisierbar. Besondere Vorteile ergeben sich bei der Kombination der maskenbasierten Detektion mit der dielektrischen Einzelteilchenspektroskopie zur hochgenauen Ermittlung dielektrischer Teilcheneigenschaften aus den Bewegungseigenschaften der Teilchen in hochfrequenten elektrischen Feldern. Durch Einsatz vorbestimmter Maskentypen kann eine erfindungsgemäße Vorrichtung problemlos an die Detektion der verschiedensten Bewegungsarten angepaßt werden, ohne daß auf Bildverarbeitungsmethoden zurückgegriffen oder ein Systemumbau durchgeführt werden muß. Es ist genügend, wenn die Detektoreinrichtung einen einzelnen Detektor enthält, dessen Meßsignale seriell verarbeitet werden können. Dies erlaubt eine Verarbeitung in Echtzeit, was insbesondere für Schalter- und Sortieranwendungen in Mikrosystemen von Bedeutung ist.

Ein weiterer Vorteil der Erfindung ergibt sich aus der geometrischen Maskenstrukturierung. Im Unterschied zum herkömmlichen "Pin-Hole"-Meßprinzip sind die Maskensegmente zwar kleiner als die Abbildung des Gesamtobjekts gestaltet, jedoch abweichend von Lochblenden (wie sie beispielsweise für die Konfokalmikroskopie bekannt sind) flächig ausgebildet. Damit wird eine erhöhte Funktionssicherheit auch bei in der Praxis auftretenden Abweichungen der Objekte von den erwarteten Bewegungsbahnen erzielt. Die Maskensegmentierung erlaubt es, Toleranzen beim Objektlauf zu kompensieren.

Weitere Einzelheiten und Vorteile der Erfindung werden im folgenden unter Bezug auf die beigefügten Zeichnungen beschrieben. Es zeigen:
- Fign. 1A, 1B: eine schematische Perspektivansicht einer Mikroelektrodenanordnung zur Illustration des erfindungsgemäßen Detektionsprinzips am Beispiel einer ersten Maskenform,
- Fign. 2 bis 12: schematische Draufsichten auf Mikroelektrodenanordnungen zur Illustration weiterer Maskenformen, wobei im unteren Teil der Figuren charakteristische Verläufe der Detektorsignale dargestellt sind,
- Fign. 13A, 13B bis 15: schematische Perspektivansichten von Mikroelektrodenanordnungen zur Illustration der Untersuchung von Wechselwirkungen zwischen einem Test-objekt und einem Substrat oder einem anderen Objekt,
- Fign. 16 bis 18: schematische Perspektivansichten von Mikroelektrodenanordnungen zur Illustration einer Kräfte- oder Feld-messung im Mikrosystem, und
- Fig. 19: eine Blockdarstellung eines Ausführungsbeispiels der erfindungsgemäßen Detektoreinrichtung.

Die Erfindung wird im folgenden am Beispiel fluidischer Mikrosysteme zur Manipulierung synthetischer oder biologischer Teilchen beschrieben. Die Realisierung der Erfindung ist nicht an bestimmte Teilchentypen gebunden. Allerdings ist es bei bestimmten Anwendungen erforderlich, daß die Teilchen eine abbildbare Oberflächenstruktur (wie z.B. Strukturen auf biologischen Zellen) besitzen. Falls dies nicht von vorneherein gegeben ist, können die Teilchen aber auch mit einer Strukturierung (z.B. mit einer Fluoreszenzmarkierung) versehen werden. Die Mikrosysteme besitzen eine Kanalstruktur mit typischen Querdimensionen im µm-Bereich und typischen Längsdimensionen im mm-Bereich. An den Kanalwänden sind Mikroelektroden mit vorbestimmten Elektrodenformen und -anordnungen angebracht, die dazu eingerichtet sind, mit hochfrequenten Spannungen (Frequenzen im kHz- bis MHz-Bereich, Amplituden im mVbis V-Bereich) beaufschlagt zu werden, um die in einer Suspension in den Kanälen strömenden oder ruhenden Teilchen elektrischen Feldern auszusetzen. Unter der Wirkung der elektrischen Felder erfolgt auf die Teilchen eine vorbestimmte Kraftausübung auf der Basis der negativen oder positiven Dielektrophorese. Weitere Einzelheiten dieser fluidischen Mikrosysteme sind an sich bekannt und werden daher im folgenden nicht beschrieben. Es wird ferner betont, daß die Erfindung nicht auf die fluidischen Mikrosysteme beschränkt, sondern auch bei anderen Anwendungen realisierbar ist, bei denen einzelne Objekte, insbesondere mikroskopisch kleine Objekte, spezifisch in Bezug auf ihre Präsenz, ihre Position und ihre Geschwindigkeit erfaßt werden sollen.

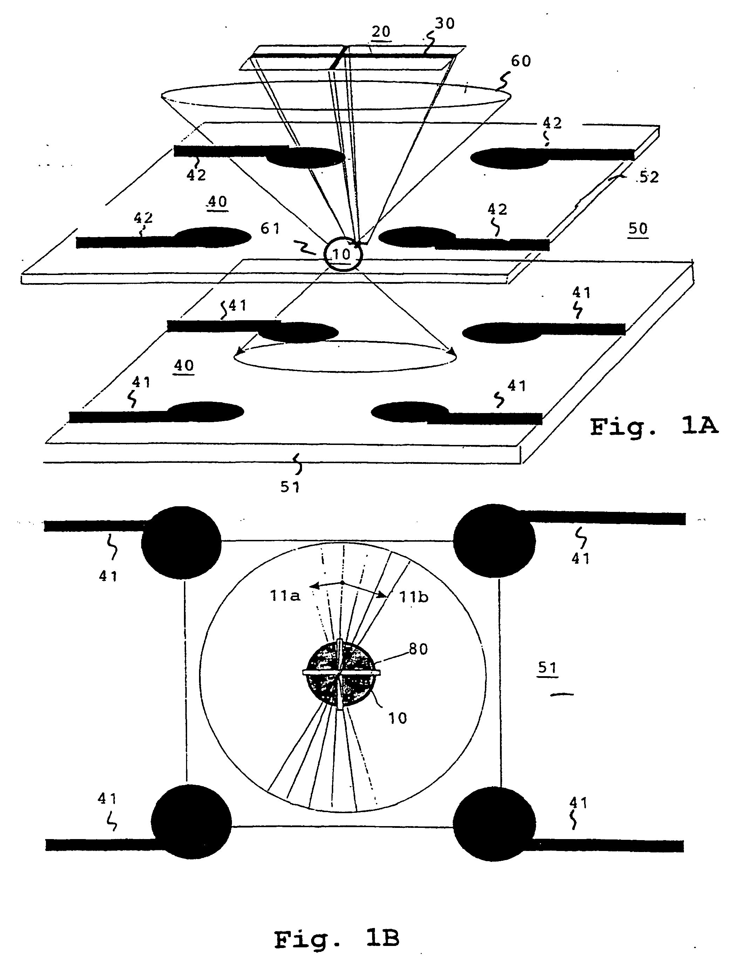

Fig. 1A zeigt in schematischer Perspektivansicht einen Ausschnitt eines Mikrosystems mit einem Kanal 50, von dessen Wänden nur der Kanalboden 51 und die Kanaldecke 52 dargestellt sind und der beispielsweise (in der Darstellung von vorn nach hinten) von einer Teilchensuspensierung durchströmbar ist. Die Elektrodenanordnung 40 ist eine Oktopolanordnung mit je vier Mikroelektroden 41 am Kanalboden 51 und je vier Mikroelektroden 42 an der Kanaldecke 52. Mit der Elektrodenanordnung 40 wird in an sich bekannter Weise ein rotierendes elektrisches Feld (Drehfeld) erzeugt, in dessen Zentrum das Teilchen 10 im Fokus 61 eines Fanglasers 60 gehalten wird. Der Fanglaser 60 ist Teil einer sogenannten optischen Pinzette (oder: Laser-Tweezer), wie sie an sich bekannt ist.

Mindestens eine Wand des Kanals 50 (z.B. die Kanaldecke 52) ist optisch transparent. Auf der Seite der transparenten Kanalwand, die eine Dicke kleiner oder gleiche 250 µm besitzt, ist eine erfindungsgemäße Abbildungseinrichtung vorgesehen, die zur Abbildung eines Teilbereiches 80 des Aufenthaltsbereiches (in diesem Fall: des Zentrums der Elektrodenanordnung 40) des Teilchens 10 auf einer Detektoreinrichtung vorgesehen ist. Das wesentliche Element der im übrigen nicht dargestellten Abbildungseinrichtung ist die Maske 20 in Gestalt einer im wesentlichen ebenen Blende mit einer vorbestimmten geometrischen Transmissionsform. Beim dargestellten Beispiel ist die Transmissionsform die Gestalt von sich kreuzenden Streifen. Die Streifen bilden die Segmente 30 der Maske 20. Generell sind die Segmente der Maske erfindungsgemäß vorzugsweise flächig oder zweidimensional angeordnet, um die Informationen über die Teilchenorte bzw. deren Änderungen zu erhalten.

Der Aufenthaltsbereich des Teilchens 10 und somit auch der Teilbereich 80 bzw. ein Teil des Teilchens 10 wird mit (nicht dargestellten) optischen Elementen auf die Ebene der Maske 20 abgebildet. Die Maske 20 überträgt einen Teil des die Abbildung des Teilchens 10 bildenden Lichtes hin zum (ebenfalls nicht dargestellten) Detektor. Bei Veränderung des Ortes des Teilchens 10 im Mikrosystem wird entsprechend auch das am Detektor von der Maske 20 summarisch empfangene Licht entsprechend den aktuell auf die-Maskenebene abgebildeten Teilchenstrukturen moduliert. Die Teilchenstrukturen umfassen beispielsweise hellere und dunklere Bereiche der Teilchenabbildung. Bei einer Bewegung des Teilchens überträgt die in Bezug auf das Mikrosysteme ortsfeste Maske 20 je nach der auf die Segmente abgebildeten Bildhelligkeit eine größere oder kleinere Lichtmenge zum Detektor.

Die Abbildung des Teilchens auf die Maskenebene ist eine vergrößernde Abbildung. Der Vergrößerungsfaktor wird anwendungsabhängig gewählt und beträgt beispielsweise bei Mikrosystem-Mikroskop-Kombinationen rd. 10 bis 20, z.B. 15. Charakteristische Dimensionen der Segmente 30 der Maske liegen im Bereich von rd. 100 µm (Streifenlänge).

In Fig. 1B ist eine entsprechende Anordnung in Draufsicht illustriert. Zur dielektrischen Einzelteilchenspektroskopie soll die Rotation des Teilchens 10 in Abhängigkeit von der Amplitude und/oder Frequenz des Drehfeldes erfaßt werden. Aus der Winkelgeschwindigkeit des Teilchens 10 lassen sich Aussagen über dessen dielektrischen Eigenschaften ermitteln. Das Drehfeld kann kontinuierlich umlaufen oder (wie dargestellt) einen laufenden Richtungswechsel aufweisen, so daß sich gegenüber einer mittleren Lage beidseitige Vibrationen in die Teilchenzustände 11a, 11b ergeben. Der mit dem Kreuz entsprechend der Maskenform abgedeckte Teilbereich 80 wird über die Maske abgebildet. Das von der Maske übertragene Licht wird entsprechend der genannten Vibration moduliert. Dem Detektorsignal kann damit unmittelbar die Vibrationsfrequenz entnommen und der Auswertung zugeführt werden.

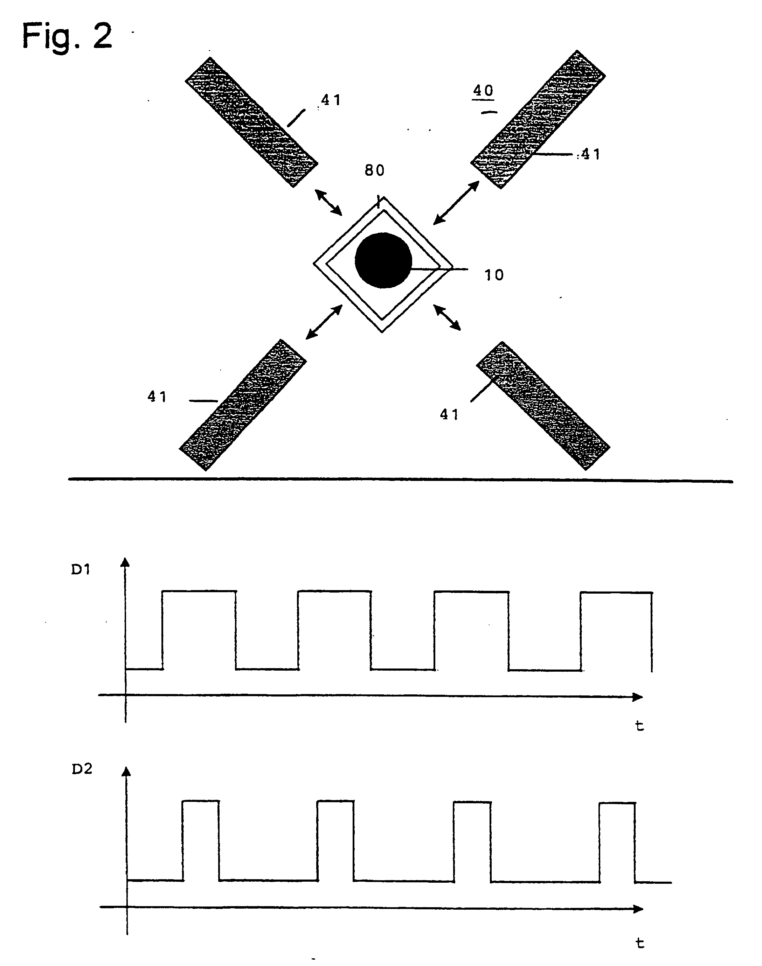

Fig. 2 illustriert eine Anwendung der Erfindung mit einer abgewandelten Maskengestaltung. Es wird darauf hingewiesen, daß in den Illustrationen der Fign. 2 bis 12 die Masken jeweils nicht dargestellt sind. Allerdings sind jeweils die Teilbereiche des Aufenthaltsbereichs der zu detektierenden Teilchen eingezeichnet, von denen Licht von der Maske übertragen wird. Die entsprechenden Maskensegmente besitzen die gleiche geometrische Form, sind jedoch wegen der eingeführten vergrößernden Abbildung größer als die eingezeichneten Teilbereiche ausgeführt. Die Maske ist so strukturiert, daß das Licht vom Teilbereich 80 des Mikrosystems mit oder ohne dem Teilchen 10 zur Detektoreinrichtung übertragen wird.

Die Gestaltung gemäß Fig. 2 dient der Objektdetektion zur Messung dielektrophoretischer Eigenschaften des Teilchens 10. Das Teilchen 10 befindet sich innerhalb einer Mikroelektrodenanordnung 40, von der nur die Elektroden 41 am Kanalboden 51 schematisch dargestellt sind. Diese Elektrodenanordnung kann wiederum durch vier Elektroden an der Kanaldecke zu einem Oktopol ergänzt werden. Es sind auch andere Mehrelektrodenanordnungen möglich. Bei anwendungsabhängig gewählten Frequenzen der Elektrodenspannungen wird das Teilchen 10 in Abhängigkeit von der äußeren Leitfähigkeit und den dielektrischen Teilcheneigenschaften verschieden schnell durch Abstoßung bzw. Anziehung zwischen den Elektroden bewegt. Diese Bewegung erfolgt beispielsweise periodisch. Das Teilchen-läuft in Abhängigkeit von seiner Schwingungsfrequenz entlang den mit Pfeilen dargestellten Richtungen (oder auch in andere Richtungen) durch den Teilbereich 80, der gerade der Transmissionsgeometrie der Maske entspricht. Das Detektorsignal (willkürliche Einheiten) wird somit frequenzabhängig moduliert, wie dies im unteren Teil von Fig. 2 angegeben ist. Der Signalverlauf D1 entspricht einer bestimmten Frequenz und einer langsamen Bewegung des Teilchens 10 zwischen den Elektroden 41. Der Signalverlauf D2 zeigt die gleiche Frequenz, jedoch eine geringere Breite der Maxima des Detektorsignals. Dies entspricht einer vergrößerten Bewegungsgeschwindigkeit des Teilchens 10 (und einer vergrößerten Auslenkung).

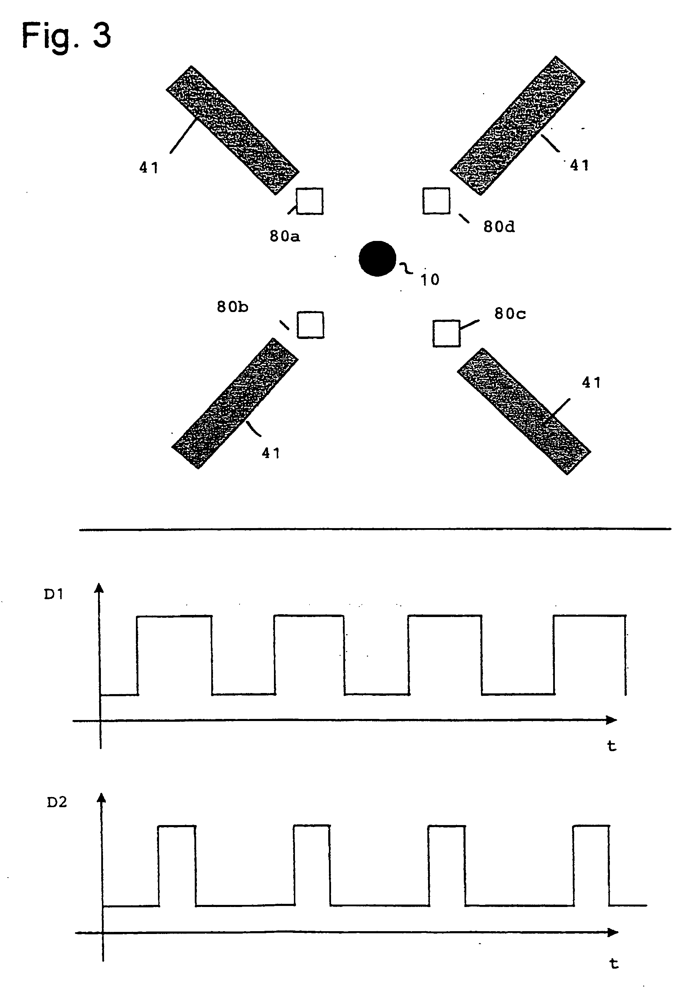

Fig. 3 illustriert eine weitere Maskengestaltung, bei der die Maske aus vier voneinander getrennten, viereckigen Segmenten besteht, die so angeordnet sind, daß die Teilbereiche 80a bis 80d auf diese Segmente abgebildet werden. Damit kann die Aufenthaltsdauer des Teilchens 10 an den Elektroden 41 bei periodischer Bewegung (analog zu Fig. 2) gemessen werden. Die Segmente dienen jeweils als Teil-Masken zur Objektdetektion. Das vom Detektor ermittelte Detektorsignal umfaßt summarisch die von allen Segmenten übertragenen Lichtmengen. Wiederum können lange Aufenthaltsdauern (D1) von kurzen Aufenthaltsdauern (D2) entsprechend dem unteren Teil von Fig. 3 unterschieden werden.

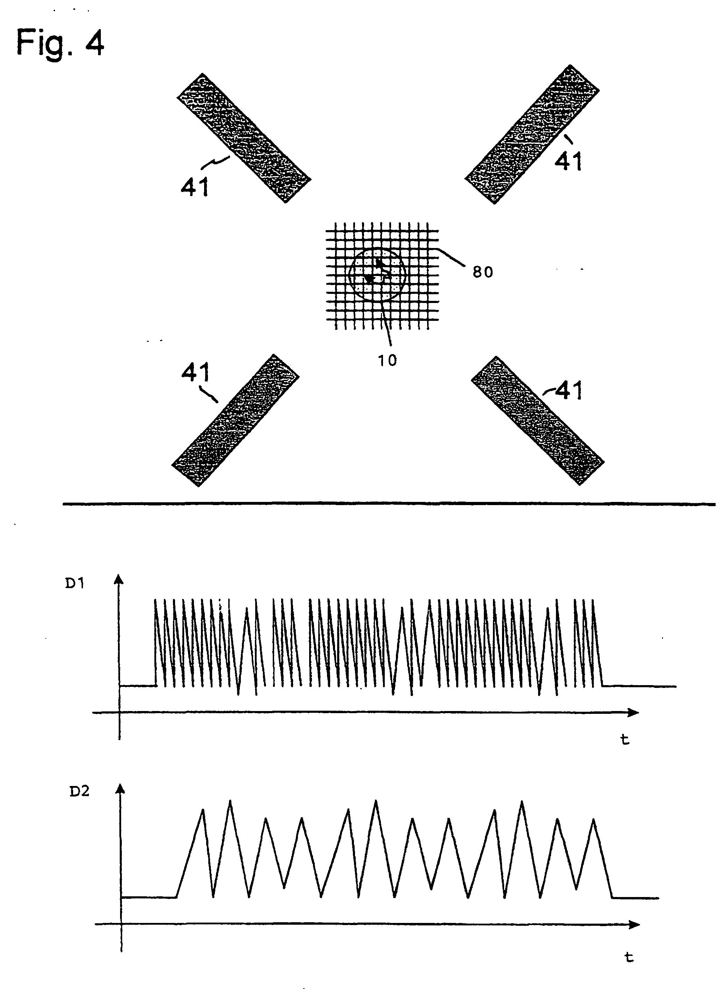

Fig. 4 illustriert die Objektdetektion zur Erfassung geringster thermischer oder hydrodynamischer Schwingungen eines Teilchens 10 zwischen den Elektroden 41. Die Maske besitzt eine gitterförmige Segmentanordnung, so daß das Licht von dem Teilbereich 80 im Mikrosystem auf den Detektor übertragen wird. Der untere Teil von Fig. 4 illustriert die Möglichkeit der Unterscheidung stärkerer Teilchenvibrationen, die zu einem hochfrequenten Rauschen D1 führen, von geringeren Vibrationen mit einer geringeren Rauschfrequenz (Verlauf D2).

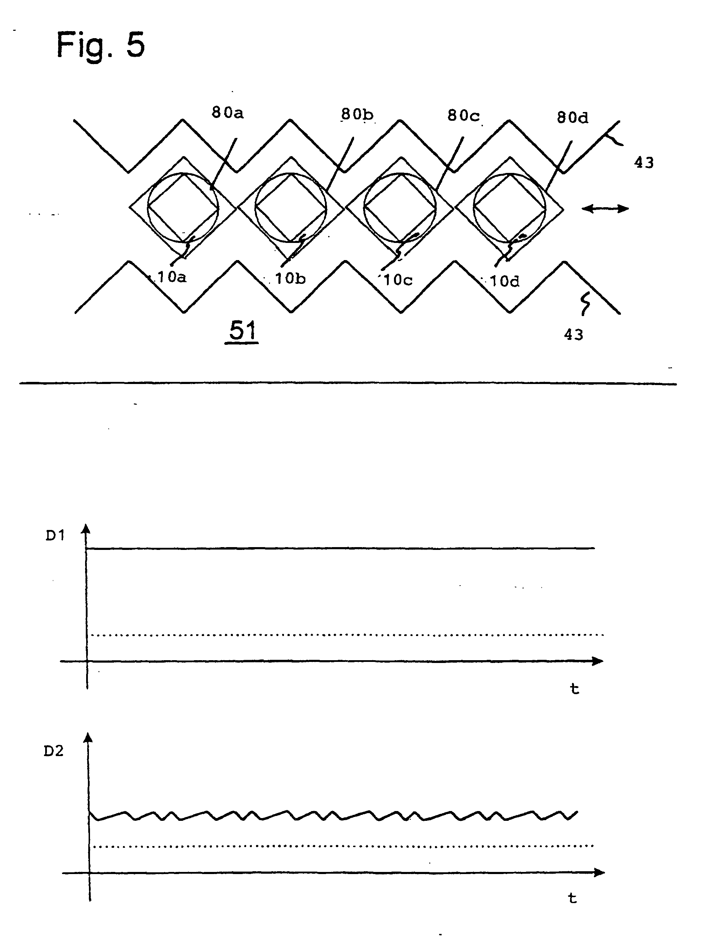

Fig. 5 illustriert eine Ausführungsform der Erfindung, bei der die Präsenz von Teilchen in einer Aufreihelektrodenanordnung geprüft wird. Die Elektrodenanordnung 40 besteht in diesem Fall aus Elektrodenbändern 43, die nach Art einer Dreiecksfunktion geformt sind. In Fig. 5 sind wiederum nur die Elektrodenbänder 43 auf dem Kanalboden 51 dargestellt. Der Kanal wird in Pfeilrichtung durchströmt. Die Elektrodenbänder 43 werden so angesteuert, daß sich in periodischen Abständen Feldminima bilden, in denen sich die Teilchen 10a bis 10d anordnen sollen.

Die Maske besteht aus einer Gruppe von Segmenten, deren Zahl der Anzahl von Feldminima der Elektrodenanordnung 40 entspricht. Jedes Segment bildet einen quadratischen Rahmen. Die Segmente der Maske sind so angeordnet, daß Licht von den Teilbereichen 80a bis 80d des Mikrosystems über die Maske auf dem Detektor abgebildet wird. Je nach den Beleuchtungsverhältnissen ergibt sich bei Präsenz eines Teilchens in einem Feldminimum ein bestimmter Beitrag zum summarischen Detektorsignal, das bei der dargestellten Aufreihung von vier Teilchen 10 vier vorbestimmte Amplituden einnehmen kann. Wenn die Aufreihelektrodenanordnung beispielsweise vollständig mit Teilchen gefüllt ist, wird die maximale Amplitude erreicht, was im Verlauf D1 mit der durchgezogenen Linie illustriert wird. Sind hingegen alle Feldminima teilchenfrei, so ergibt sich die geringste Amplitude, die im Verlauf D1 gepunktet gezeichnet ist. Alternativ zur Erfassung der Amplitude des Detektorsignals können auch Schwankungen der Amplitude gemessen werden. Dies ist mit dem Verlauf D2 illustriert. Aus diesem sogenannten Varianzeffekt lassen sich entsprechend Aussagen über die Stabilität der Teilchen in der Aufreihelektrodenanordnung treffen.

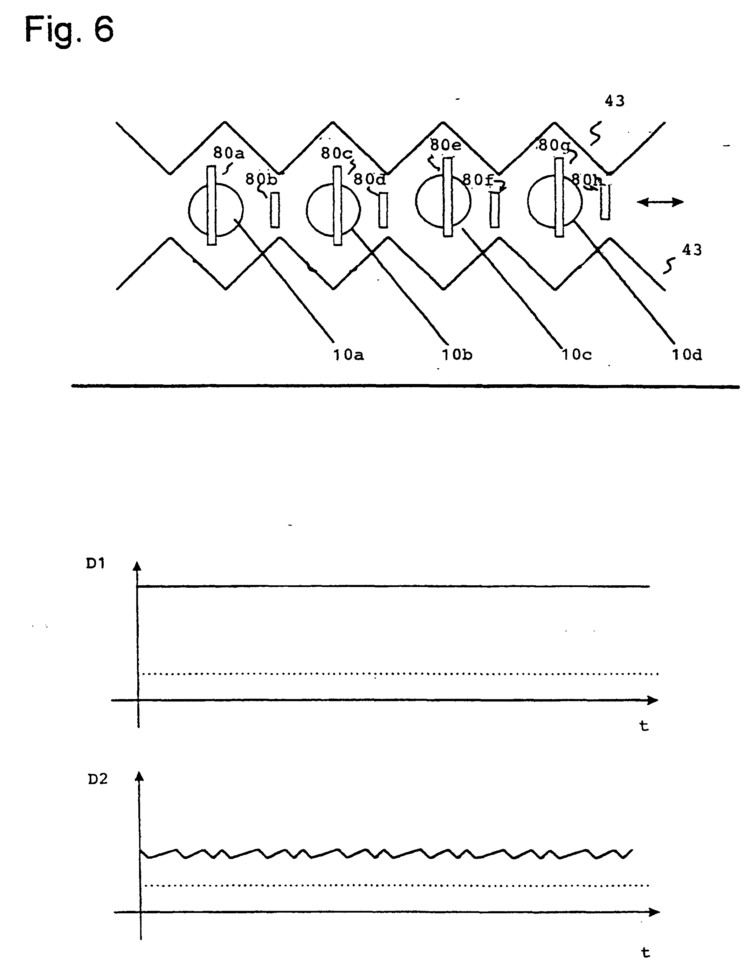

Eine abgewandelte Maskengestaltung zur Überprüfung des Teilchenaufreihung ist in Fig. 6 illustriert. Die Maske besteht aus streifenförmigen, voneinander beabstandeten Segmenten, die die Teilbereiche 80a bis 80h des Mikrosystems auf dem Detektor abbilden. Die Segmentstreifen besitzen abwechselnd verschiedene Längen und sind so angeordnet, daß die längeren Segmentstreifen die Teilbereiche 80a, 80c, 80e und 80g entsprechend den Feldminima zwischen den Elektrodenbändern 43 und die kürzeren Segmentstreifen die Teilbereiche 80b, 80d, 80f, 80h des Mikrosystems erfassen. Das Detektorsignal besitzt wiederum einen Verlauf, der im wesentlichen der Darstellung im unteren Teil von Fig. 5 entspricht, wobei jedoch zusätzliche Amplitudenstufen entsprechend der Teilchendetektion an den Orten zwischen den Feldminima auftreten.

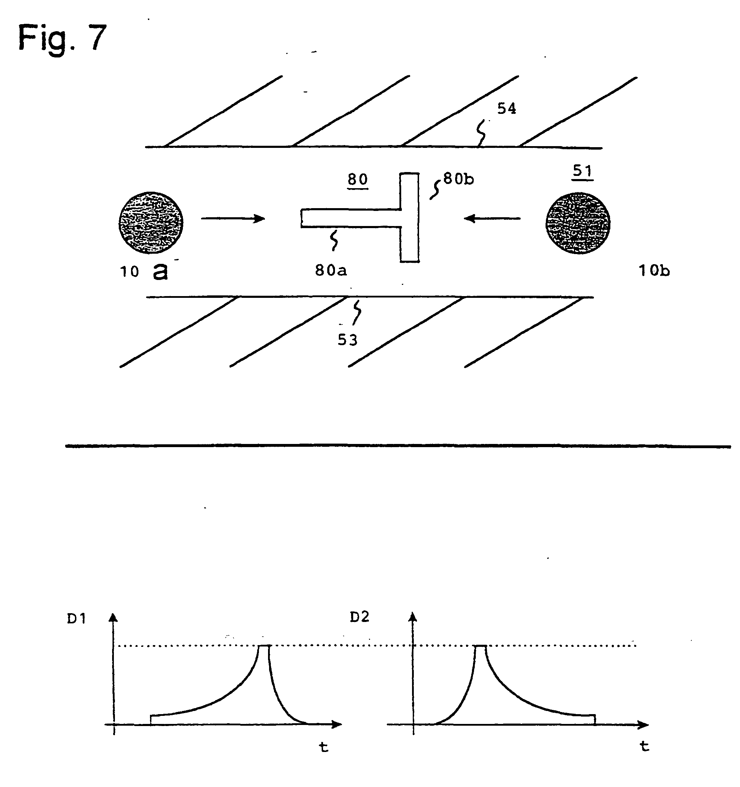

Fig. 7 illustriert das Prinzip der erfindungsgemäßen Erfassung der Bewegungsrichtung. Der obere Teil von Fig. 7 ist eine schematische Draufsicht auf einen Kanal, bei der an den Kanalboden 51 angrenzend auch die Kanalseitenwände 53, 54 illustriert sind. Die Maske besitzt eine T-förmige Transmissionsgeometrie und wird durch zwei gerade streifenförmige Segmente gebildet, von denen ein längeres Segment in Kanallängsrichtung (entsprechend den Pfeilrichtungen) ausgerichtet und ein kürzerer Segmentstreifen dazu senkrecht am Ende des längeren Segmentstreifens verläuft. Die Abbildung auf der Maske führt zur Übertragung des Lichtes von dem T-förmigen Teilbereich 80 des Mikrosystems zum Detektor.

Das Detektorsignal besitzt dann je nach Bewegungsrichtung einen der im unteren Teil von Fig. 7 dargestellten Verläufe. Das Teilchen 10a, das sich von links nach rechts bewegt, trägt zunächst beim Längsstreifen 80a und dann beim Querstreifen 80b zum Detektorsignal bei, das entsprechend dem Verlauf D1 beim Teilchendurchlauf zunächst langsam ansteigt und nach Passage des Teilchens 10a am Querstreifen 80b schnell abfällt. Für das Teilchen 10b, das sich von rechts nach links bewegt, ergeben sich die umgekehrten Verhältnissse. Das Detektorsignal steigt entsprechend dem Verlauf D2 zuerst schnell an und fällt dann langsam ab. Das Detektorsignal besitzt somit einen charakteristischen Zeitverlauf, der eine Aussage über die Bewegungsrichtung der Teilchen im Kanal zuläßt.

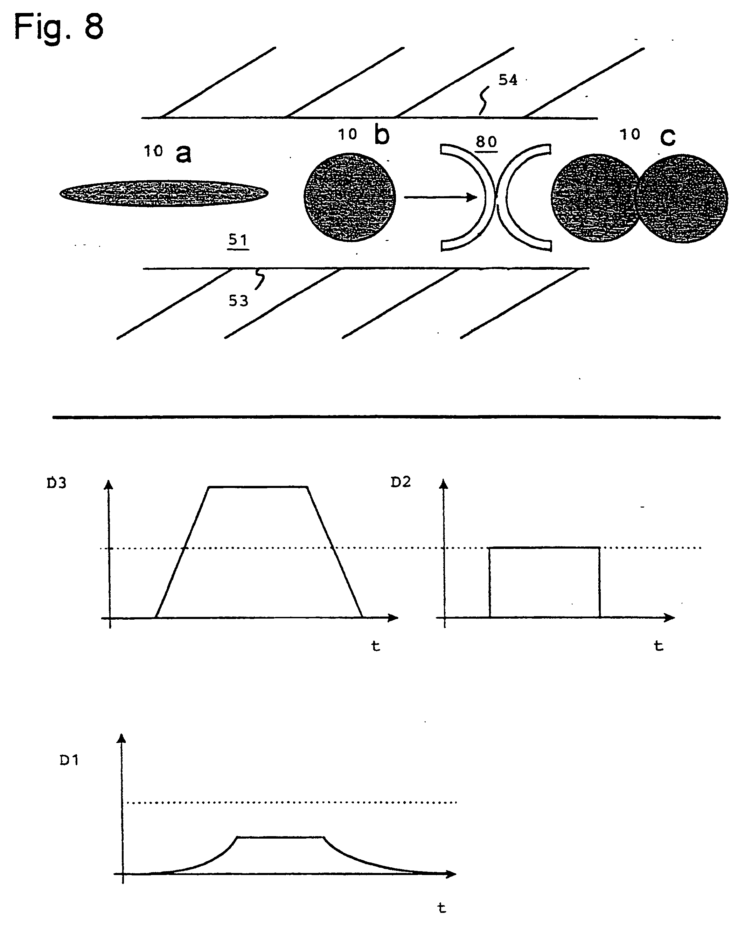

Eine erfindungsgemäße Maske kann auch so gestaltet sein, daß Formunterschiede von Teilchen im Mikrosystem detektiert werden können. Dies ist in Fig. 8 illustriert, die wiederum eine Draufsicht auf einen Kanal mit dem Kanalboden 51 und den Kanalseitenwänden 53, 54 zeigt. Im Kanal bewegen sich Teilchen 10a, 10b und 10c mit verschiedenen Geometrien.

Die Maske besteht aus zwei streifenförmigen Segmenten, die jeweils halbkreisförmig gebogen sind und sich an ihren Scheitelpunkten berühren. Dadurch erlaubt die Maske die Übertragung des vom Teilbereich 80 des Mikrosystems ausgehenden Lichts zum Detektor. Je nach dem zeitlichen Verlauf des Detektorsignals können die jeweils am Teilbereich 80 vorbeigetretenen Teilchenformen unterschieden werden. Dies ist im unteren Teil von Fig. 8 illustriert.

Das längliche Teilchen 10a erzeugt einen Signalverlauf D1, da das Detektorsignal für eine verhältnismäßig lange Zeit moduliert wird, jedoch wegen der geringen Querausdehnung des Teilchens 10a nur eine geringe Amplitude besitzt. Bei einem runden Teilchen 10b, an dessen Gestalt die halbkreisförmige Krümmung der Maskensegmente angepaßt ist, ergibt sich der Verlauf D2. Der Eintritt des Teilchens 10b in den Teilbereich 80 verursacht einen schnellen Signalanstieg. Entsprechendes gilt für den Fall, wenn das Teilchen 10b den Teilbereich 80 verläßt. Schließlich führt das Teilchen 10c (Pärchen) zu einem Signalverlauf D3, der sich wegen der größeren Längsausdehnung gegenüber dem Teilchen 10b über einen größeren Zeitbereich erstreckt und wegen der größeren Querausdehnung im Vergleich zum Teilchen 10a eine höhere Amplitude erreicht.

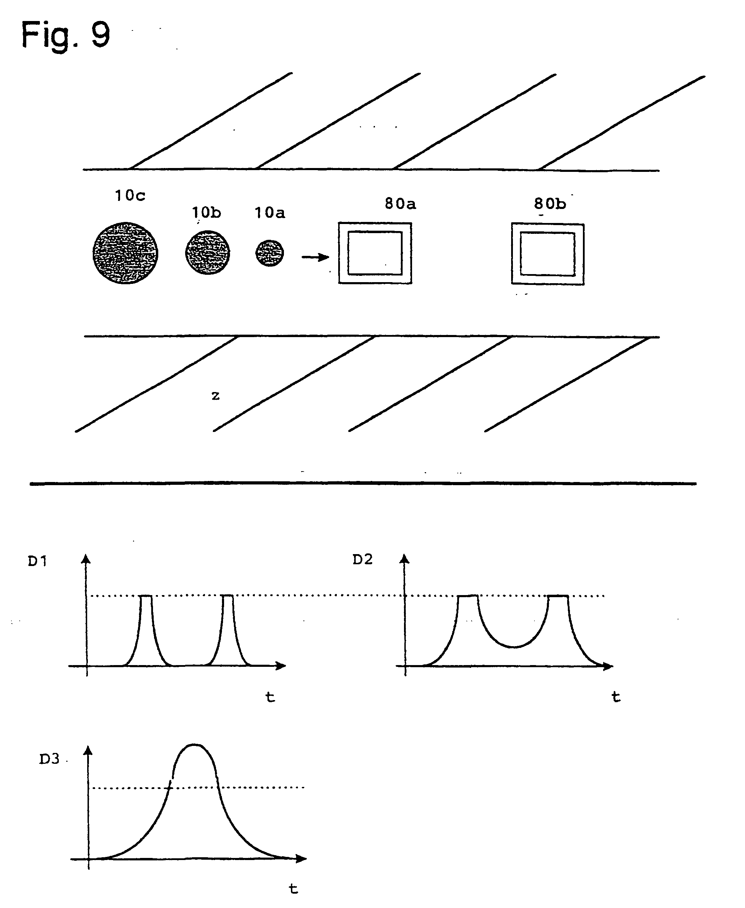

Die oben unter Bezug auf Fig. 2 erläuterte Maskenform kann auch zur Partikelzählung verwendet werden, wie dies in Fig. 9 illustriert ist. Die Maske enthält zwei Segmente, die zur Übertragung von Licht aus den Teilbereichen 80a, 80b eingerichtet sind und jeweils die Form eines quadratischen Rahmens besitzen. Die Teilbereiche 80a, 80b sind in Kanallängsrichtung mit einem vorbestimmten Abstand angeordnet. Die Wahl des Anstandes und der Größe der Teilbereiche 80a, 80b (bzw. der entsprechenden Maskensegmente) wird in Abhängigkeit von den auftretenden Teilchengrößen und der Strömungsgeschwindigkeit im Kanal gewählt. Die Teilchenzählung kann sogar größenselektiv erfolgen.

So verursacht das kleinste Teilchen 10a den Signalverläuf D1 mit zwei getrennten Maxima entsprechend dem Vorbeitritt des Teilchens 10a an jedem der Teilbereiche 80a, 80b. Bei dem mittleren Teilchen 10b ergibt sich der Signalverlauf D2, bei dem die Maxima ineinander verlaufen. Bei genügend großen Teilchen 10c mit einer charakteristischen Größe, die mit dem Abstand der Teilbereiche 80a, 80b vergleichbar ist, ergibt sich der Signalverlauf D3 mit einem einzelnen Maximum. Die Signalverläufe D1 und D2 können zusätzlich zur Ermittlung der Teilchengeschwindigkeit aus dem Abstand der Maxima verwendet werden.

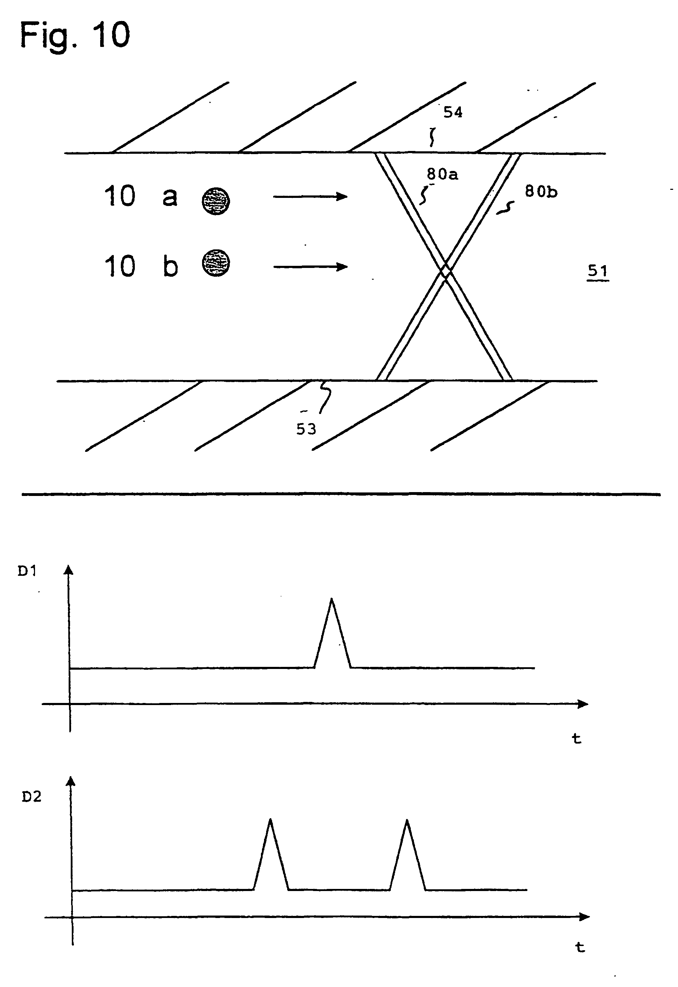

Fig. 10 zeigt wiederum eine Draufsicht auf einen Kanal mit dem Kanalboden 51 und den Kanalseitenwänden 53, 54. Im Kanal bewegen sich mit der strömenden Suspensionsflüssigkeit Teilchen 10a, 10b entsprechend der Pfeilrichtung. Die erfindungsgemäße Objektdetektion ist hier so ausgelegt, daß ermittelt wird, ob sich ein Teilchen in Kanalmitte oder mehr am Rand des Mikrokanals bewegt. Hierzu besitzt die Maske zwei Segmente aus geraden, sich kreuzenden Streifen, die so angeordnet sind, daß das Licht von den Teilbereichen 80a, 80b des Mikrosystems zum Detektor übertragen wird. Die Teilbereiche 80a, 80b erstrecken sich jeweils als gerade Streifen über die gesamte Breite des Kanals und sind gegenüber der Kanalquerrichtung geneigt, so daß sich eine X-Gestalt mit einem Kreuzungspunkt der Streifen in der Kanalmitte ergibt.

Eine Detektion durch eine Maske, die das Licht von derart gewählten Teilbereichen 80a, 80b überträgt, ergibt einen Signalverlauf D1 mit einem einzelnen Maximum, falls das Teilchen 10b sich in der Kanalmitte bewegt, oder einen Signalverlauf D2, falls sich das Teilchen 10a am Kanalrand bewegt, so daß jeder Teilbereich 80a, 80b zweimal gekreuzt wird.

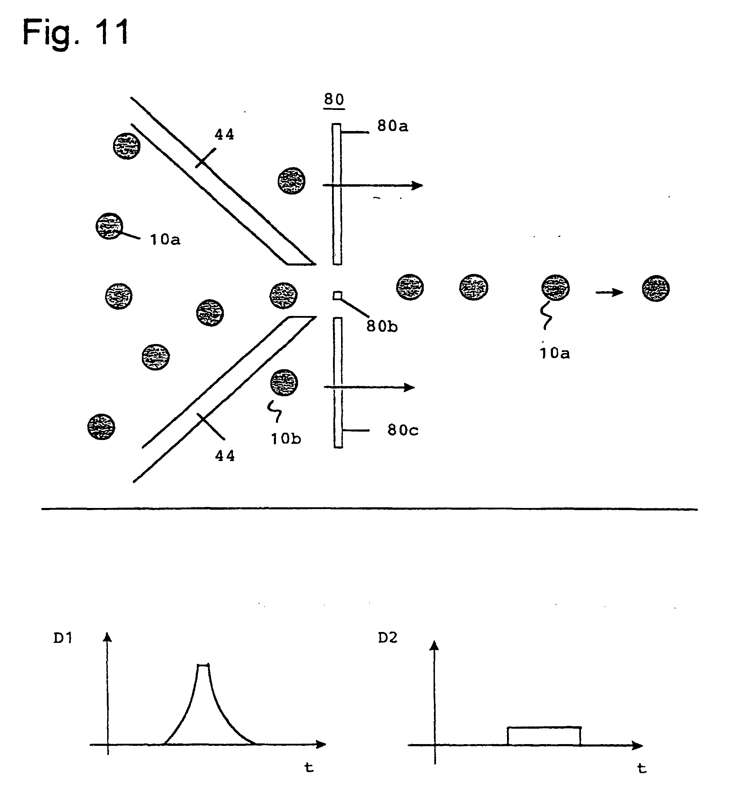

Eine ähnliche Überprüfungsfunktion ist in Fig. 11 illustriert, die eine Draufsicht auf einen Kanal mit Fokussierelektroden 44 auf dem Kanalboden 51 darstellt. Die Fokussierelektroden 44 bilden bei Beaufschlagung mit hochfrequenten Spannungen Feldbarrieren, die die Teilchen 10a nicht durchdringen können, so daß in Zusammenwirkung mit der Strömungskraft eine Teilchenbewegung hin zur Kanalmitte erfolgt. Falls eine der Fokussierelektroden 44 ausfällt, so können Teilchen 10b außerhalb der Mitte an den Elektroden vorbeitreten.

Um eine derartige Fehlfunktion der Fokussierelektroden 44 zu ermitteln, wird die Maske so gestaltet, daß wiederum Teilchen am Kanalrand von Teilchen in der Kanalmitte unterschieden werden können. Hierzu besitzt die Maske drei Segmente, die zwei gerade streifenförmige Segmente und ein punktförmiges Segment umfassen und in einer geraden Reihe quer zur Kanallängsrichtung angeordnet sind. Diese Segmente sind dazu eingerichtet, das Licht von den Teilbereichen 80a, 80b, 80c des Mikrosystems zum Detektor zu übertragen. Je nach der Passage der Teilchen 10a durch die Mitte oder der Teilchen 10b durch die Ränder des Kanals ergeben sich die im unteren Teil von Fig. 11 gezeigten Signalverläufe. Der Signalverlauf D1 zeigt eine hohe Amplitude, d.h. eine starke Modulation des Detektorsignals. Dies zeigt an, daß Teilchen 10b die Teilbereiche 80a oder 80c durchlaufen haben und somit eine oder beide der Fokussierelektroden 44 ausgeschaltet oder defekt sind. Der Signalverlauf D2 hingegen zeigt eine geringe Modulation entsprechend der Teilchenpassage durch die Kanalmitte. Das Signal entsprechend dem Signalverlauf D2 kann wiederum als Zählsignal für die Zahl der Teilchen 10b, die die Fokussieranordnung passiert haben, verwendet werden.

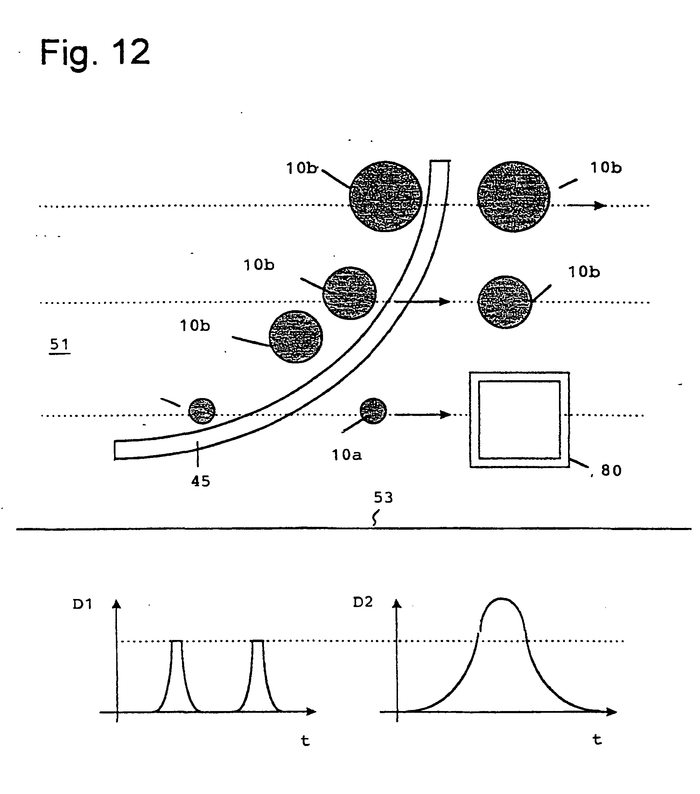

Eine Maske, wie sie in Bezug auf Fig. 2 beschrieben wurde, kann auch zur Überprüfung der Funktion einer Ablenkelektrode 45 verwendet werden. Diese Anwendung der Erfindung ist in Fig. 12 illustriert. Die Ablenkelektrode 45 ist eine Mikroelektrode auf dem Kanalboden 51 in Form eines gekrümmten Elektrodenstreifens. Die Ablenkelektrode 45 bildet in Zusammenwirkung mit einer entsprechenden Ablenkelektrode (nicht dargestellt) an der Kanaldecke bei Beaufschlagung mit hochfrequenten Spannungen eine gekrümmte Feldbarriere, die die anströmenden Teilchen 10a bzw. 10b in Abhängigkeit von ihren dielektrischen Eigenschaften mit verschiedenen Abständen von der Kanalseitenwand 53 passieren können. Ist die Ablenkelektrode 45 eingeschaltet, so können die kleinsten Teilchen 10a, bei denen die geringsten Polarisationskräfte induziert werden, die Feldbarriere bereits am Kanalrand passieren, während die größeren Teilchen 10b weiter hin zur Kanalmitte laufen, bis die Strömungskraft genügend groß ist, so daß eine Passage der Feldbarriere bewirkt wird. Wenn die Ablenkelektrode 45 ausgeschaltet ist, so können sowohl kleine als auch große Teilchen am Kanalrand weiter strömen.

Die Maske besitzt ein quadratisches, rahmenförmiges Segment, das dazu eingerichtet ist, das vom Teilbereich 80 des Mikrosystems ausgehende Licht zum Detektor zu übertragen. Falls nur kleine Teilchen 10a am Teilbereich 80 vorbeitreten, so ergibt sich der Signalverlauf D1 mit zwei getrennten Maxima entsprechend dem Vorbeitritt der kleinen Teilchen 10a an den zwei Rahmenseiten in Strömungsrichtung. Wenn die Ablenkelektrode 45 ausgeschaltet oder defekt ist, so werden über die Maske auch größere Teilchen detektiert, so daß sich der Signalverlauf D2 mit einem einzelnen, verbreitetem Maximum ergibt.

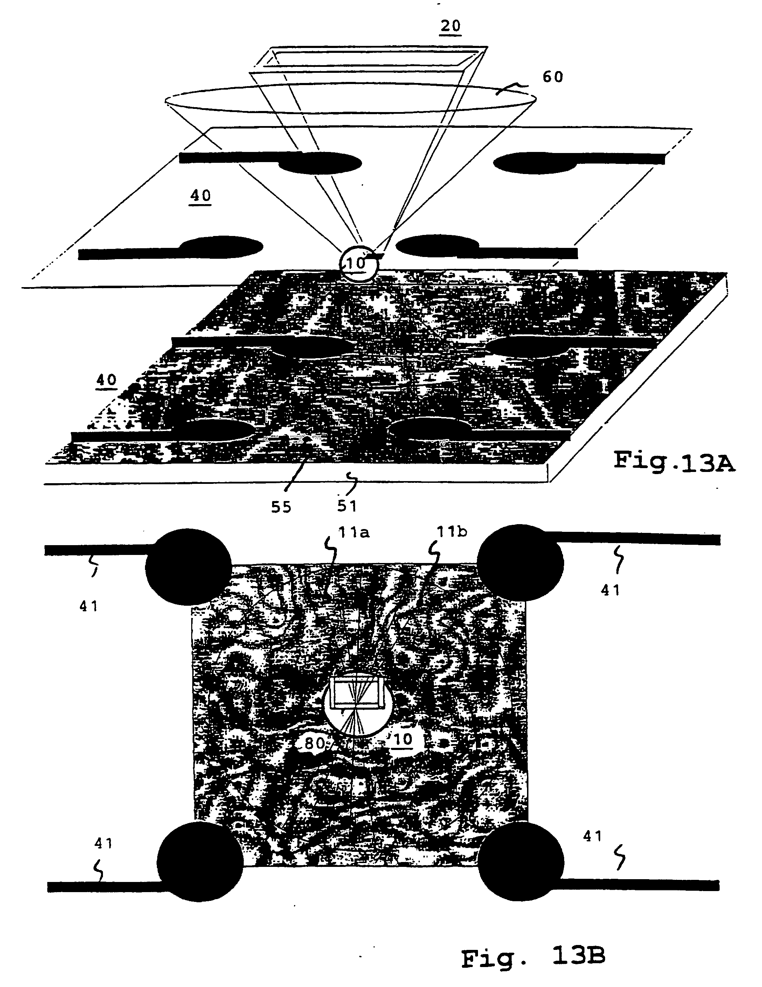

Die oben unter Bezug auf die Fign. 1 bis 12 beschriebenen Ausführungsbeispiele bezogen sich auf die Teilchendetektion in den an sich bekannten Mikrosystemen mit Kanalstrukturen aus in Bezug auf die Teilchen inerten Materialien. Die im folgenden erläuterten Fign. 13 bis 15 zeigen eine besonderes vorteilhafte Anwendung der Erfindung in modifizierten Mikrosystemen, in denen die Wechselwirkung der Teilchen mit den Kanalwänden nicht vermieden, sondern in vorbestimmter Weise befördert wird. Diese Modifizierung ist in den Fign. 13A und 13B in Analogie zur Darstellung gemäß Fig. 1 illustriert.

Fig. 13A zeigt in schematischer Perspektivansicht wie Fig. 1 den Ausschnitt eines fluidischen Mikrosystems. Allerdings bildet hier der Kanalboden 51 ein Substrat für eine Modifizierungsschicht 55. Die Modifizierungsschicht 55 besteht beispielsweise aus einer Monolage biologischer Zellen. Wiederum soll, wie oben beschrieben die Bewegung des Teilchens 10 mit der erfindungsgemäßen Objektdetektion erfaßt werden, die hier durch eine rahmenförmige Maske 20 erfolgt. Das Teilchen 10 ist ein Testobjekt, das eine biologische Zelle oder ein künstliches Teilchen mit spezifischen oder unspezifischen Bindungsstellen (Molekülen) sein kann. Die Bewegung des Teilchens 10 wird durch die Wechselwirkung mit der Modifizierungsschicht 55, d.h. durch die auftretenden Adhäsionserscheinungen beeinflußt.

Zur Bestimmung der Adhäsionseigenschaften des Teilchens 10 gegenüber der Modifizierungsschicht 55, d.h. zur Bestimmung von Bindungskräften, Bindungskonstanten und/oder der Dynamik der Zelladhäsion wird das Teilchen mit Hilfe des Fanglasers 60 auf die Oberfläche der Modifizierungsschicht 55 gedrückt, während das Drehfeld der Elektrodenanordnung 40 schwingende Rotationen nach links oder rechts induziert. Die oszillatorischen Teilchenvibrationenen in die Zustände 11a, 11b werden, wie oben beschrieben, über die Maske 20 erfaßt. Durch Vergleich mit den Bewegungseigenschaften ohne eine Adhäsion lassen sich Aussagen über die Bindungskräfte und dergl. treffen. Abweichend von der dargestellten Rahmenmaske 20 können auch andere Maskenformen Anwendung finden. Fig. 13B zeigt die entsprechende Situation in Draufsicht.

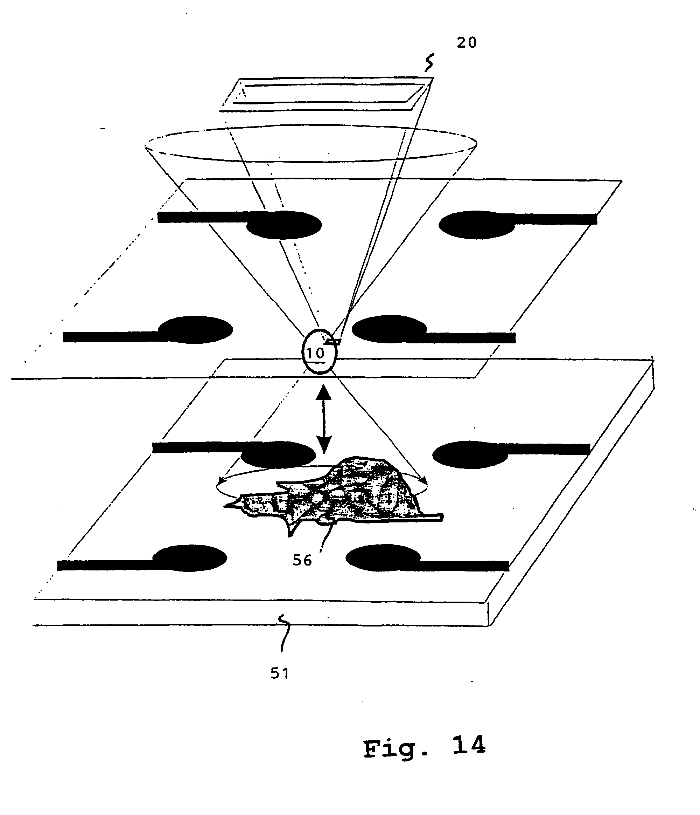

Die Modifizierung kann auch durch ein einzelnes Teilchen auf dem Kanalboden 51 gebildet werden. Diese Situation ist in Fig. 14 illustriert. Auf dem Kanalboden 51 befindet sich eine biologische Zelle 56. Wiederum erfolgt die erfindungsgemäße Erfassung der Teilchenbewegung des Teilchens 10 in Abhängigkeit von der Wechselwirkung mit der Zelle 56. Bei genügend kleinen Teilchen (Durchmesser kleiner 5 µm) können die Oberflächen der Zellen 56 auch ortsaufgelöst vermessen werden. Es besteht auch die Möglichkeit, die ortsaufgelöste, partielle Vermessung der Wechselwirkungen der Zelle 56 mit dem Teilchen 10 mit einer chemische Stimulierung der angehefteten Zelle 56 zu verbinden.

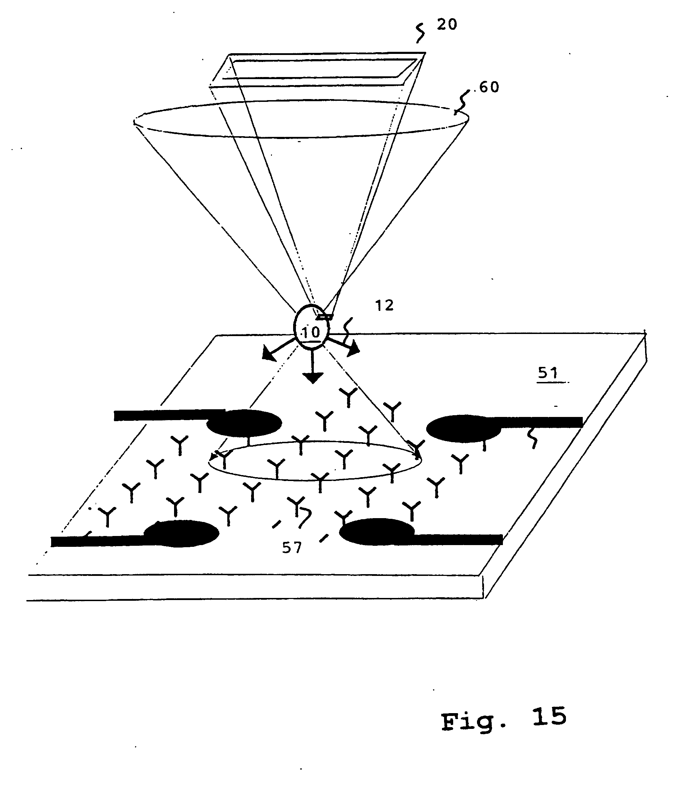

Fig. 15 zeigt eine weitere Abwandlung der Objektdetektion zur Erfassung von Wechselwirkungen eines Teilchens mit einer Modifizierungsschicht auf dem Kanalboden 51. Die Modifizierungsschicht besteht aus einer Vielzahl molekularer Rezeptoren 57.

Das Teilchen 10 weist Liganden 12 auf. Es erfolgt eine Drehung des Teilchens, wie dies oben unter Bezug auf Fig. 1 beschrieben wurde. Aus der Teilchendetektion kann festgestellt werden, ob der Ligand 12 eine Bindung mit den Rezeptoren 57 eingeht. Das Teilchen 10 kann selbst eine biologische Zelle oder ein Zellbestandteil sein und natürlich bedingt einen Rezeptor auf der Oberfläche tragen.

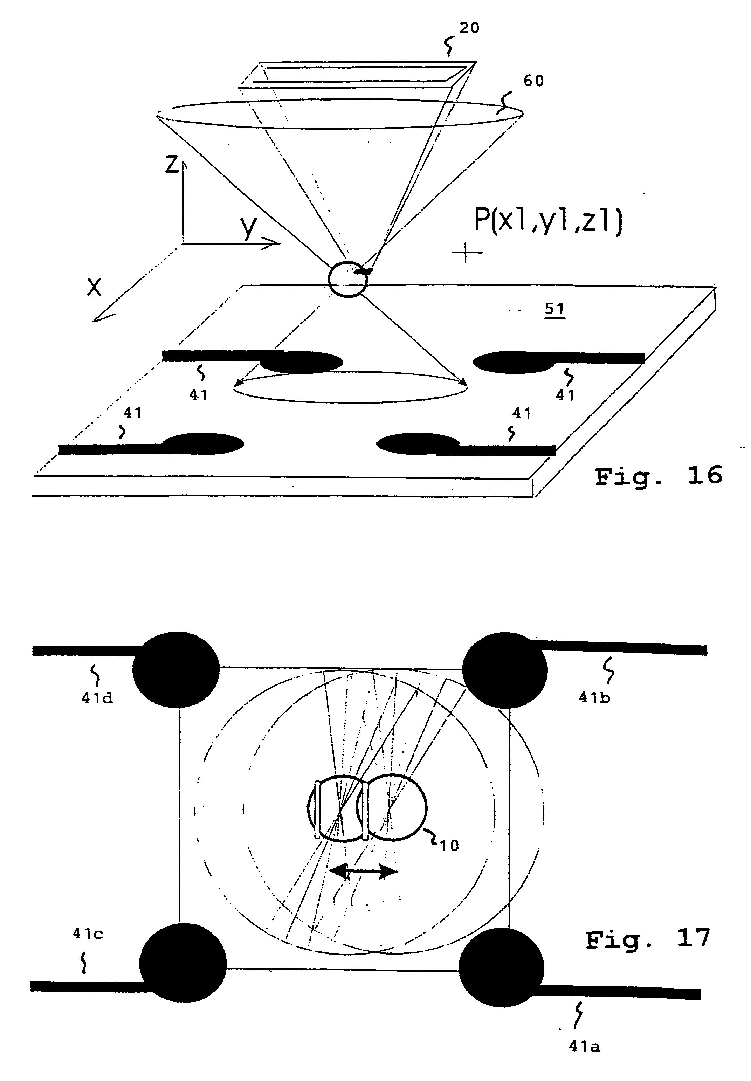

Eine weitere Anwendung der Erfindung zur Messung von Kräften in einem Mikrosystem ist in den Fign. 16 und 17 illustriert. Fig. 16 zeigt analog zu Fig. 1 einen Ausschnitt eines Mikrosystems mit dem Kanalboden 51 und den unteren Mikroelektroden 41. Mit dem Fanglaser 60 wird das Teilchen 10 an eine vorbestimmte Position P mit den Koordinaten (x1, y1, zl) geführt und dort den Drehfeldern der Elektrodenanordnung ausgesetzt. Die Abbildungseinrichtung mit der Maske 20 wird entsprechend verstellt, um die Objektbewegung zu erfassen. Die am Punkt P gemessene Winkelgeschwindigkeit des Teilchens 10 steht in direkter Beziehung zur Feldstärke an diesem Ort (die Winkelgeschwindigkeit ist proportional zum Quadrat der Feldstärke). Auf diese Weise kann mit der erfindungsgemäßen Objektdetektion unter Verwendung eines kleinen Probeteilchens 10 das elektromagnetische Feld im Mikrosystem in x-, y- und z-Richtung vermessen werden, indem das Probeteilchen 10 rasterartig an verschiedenen Raumpositionen zwischen den Mikroelektroden einer Rotationsmessung unterzogen wird.

Bei dieser Messung kann auch eine Maskengestaltung vorgesehen sein, mit der Teilchenbewegungen im gesamten Bereich zwischen den Mikroelektroden erfaßt werden können. In diesem Fall muß die Maske 20 bei der Verstellung zu einem neuen Punkt P nicht verschoben werden.

Eine weitere Maskengestaltung mit zwei streifenförmigen Segmenten (Detektionsschlitze) wird gemäß Fig. 17 zur Erfassung von Teilchenbewegungen in Pfeilrichtung verwendet. Die Bewegung des Teilchens 10 in x-Richtung erfolgt mit dem (nicht dargestellten) Fanglaser oder durch eine Verschiebung der Amplituden der hochfrequenten Spannungen an den Elektroden 41a, 41b bzw. 41c, 41d. Aus der Auslenkung des Teilchens lassen sich Informationen über dielektrische Teilcheneigenschaften, die Feldkräfte im Fokus des Fanglasers und die elektromagnetischen Feldkräfte ableiten.

Analog zu der in den Fig. 15 bis 17 erläuterten Technik kann auch eine Vermessung der Feldkräfte im Fanglaser 60 durch Messung der Drehgeschwindigkeit eines Probeteilchens in Abhängigkeit vom Abstand vom Fokus des Fanglasers verwendet werden.

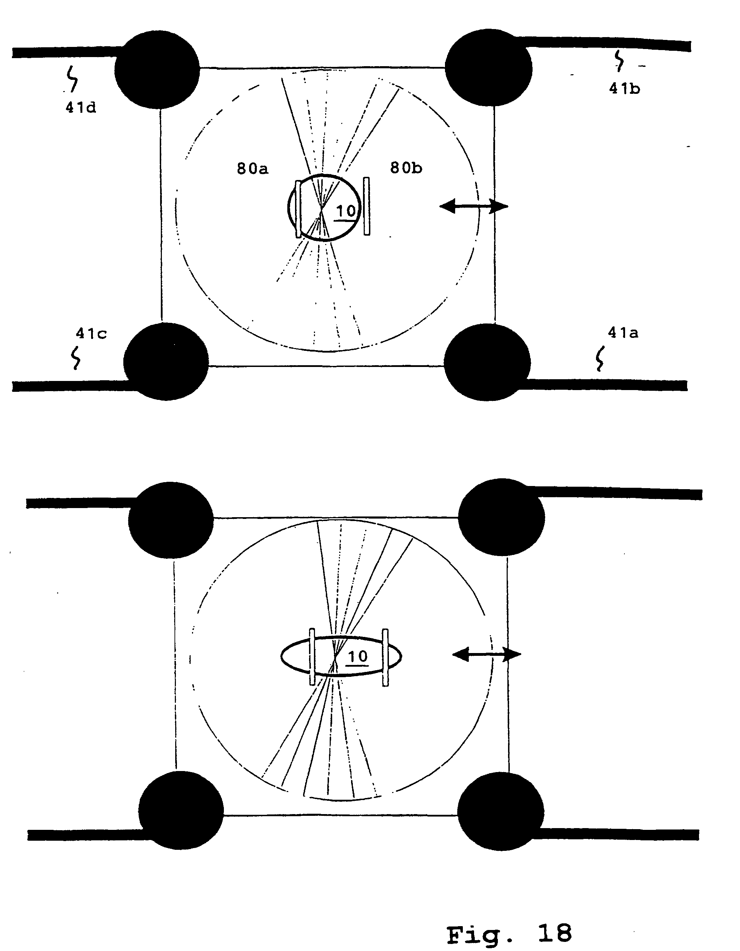

Die erfindungsgemäße Objektdetektion ist auch zur Erfassung von Teilchendeformationen einsetzbar. Dies ist in Fig. 18 illustriert. Das Teilchen 10 wird durch Einstellung eines inhomogenen hochfrequenten elektrischen Feldes an den Elektroden 41a, 41b bzw. 41c, 41d deformiert, während es mit dem Fanglaser in freier Suspension gehalten wird. Die Deformation kann beispielsweise von einer runden Teilchengestalt (oberer Teil von Fig. 18) zu einer ellipsenförmigen Teilchengestalt (unterer Teil von Fig. 18) führen. Mit einer Schlitzmaske, die zwei streifenförmige Segmente aufweist, die dazu eingerichtet sind, Licht von den Teilbereichen 80a, 80b des Mikrosystems zum Detektor zu übertragen, kann die Asymmetrie des Teilchens 10 erfaßt werden. Aus der Verformung, die aus dem Detektorsignal abgeleitet wird, können mechanische Eigenschaften des Teilchens (z.B. biologische Zelle) abgeleitet werden. Anwendungsabhängig können zur Deformationsuntersuchung auch andere Maskenformen verwendet werden, die an die jeweiligen Asymmetrien angepaßt sind.

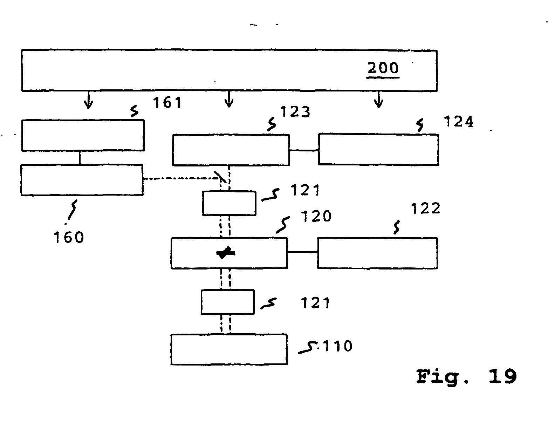

Fig. 19 ist eine Übersichtsdarstellung einer erfindungsgemäßen Einrichtung zur Objektdetektion bei Implementierung der Erfindung an einem fluidischen Mikrosystem. Das fluidische Mikrosystem 110, in dem eine Suspension mit mindestens einem zu untersuchenden Teilchen enthalten ist, wird über eine Steuereinrichtung 111 angesteuert. Enthält das Mikrosystem Mikroelektroden zur dielektrischen Teilchenmanipulierung, so enthält die Steuereinrichtung 111 insbesondere einen Generator zur Elektrodenansteuerung.

Ein interessierender Bereich des Mikrosystems 110 wird über optische Elemente 121 vergrößert auf der strukturierten Maske 120 abgebildet, die mit einer Stelleinrichtung 122 in Bezug auf das Mikrosystem einstellbar ist. Das durch die strukturierte Maske 120 hindurchtretende Licht wird durch weitere optische Elemente 121, die gegebenenfalls einen Sperrfilter in Bezug auf das Licht des Fanglasers 160 umfassen, auf den Detektor 123 (z.B. Photodiode) summierend abgebildet. Der Detektor 123 ist mit einer Auswertungseinrichtung 124 verbunden, die insbesondere eine Recheneinheit zur Auswertung der Signalverläufe und eine Anzeigeeinheit zur visuellen Darstellung der erfaßten Objekteigenschaften enthält. Die Auswertung der Signalverläufe erfolgt in an sich bekannter Weise, insbesondere in Bezug auf die zeitliche Lage der Maxima, die Amplituden der Signale und deren Phasenlagen.

Fig. 19 zeigt ferner den Fanglaser 160, der über eine gesonderte Laser-Tweezer-Steuerung 161 angesteuert wird. Das Bezugszeichen 200 zeigt eine Gesamtsteuereinheit zur anwendungsabhängigen synchronen Betätigung der Lasersteuerung 161, der Steuereinrichtung 111 und der Stelleinrichtung 122.

Die Abbildungseinrichtung mit den optischen Elementen und der strukturierten Maske 120 wird vorzugsweise in ein Mikroskop integriert, dessen Einzelheiten nicht dargestellt sind. Über das Mikroskop kann ebenfalls der Fanglaser 160 in das Mikrosystem 110 gerichtet werden.

Bei einer alternativen Gestaltung der erfindungsgemäßen Vorrichtung wird die strukturierte Maske unmittelbar auf der lichtempfindlichen Fläche des Detektors ausgebildet. Es kann ferner vorgesehen sein, daß der Detektor nicht durch eine einzelne Photodiode, sondern durch eine CCD-Matrix gebildet wird. Bei einer derartigen Gestaltung kann eine Abbildung des Aufenthaltsbereichs des Teilchens auf die CCD-Matrix und eine anschließende elektronische Maskierung des Matrixsignals durch Auswertung der Signale von bestimmten Bildpunkten erfolgen.

## Patentansprüche

1. Verfahren zur Objektdetektion mit den Schritten:
- vergrößerte optische Abbildung mindestens eines ruhenden oder bewegten Objekts (10) auf eine strukturierte Maske (20) mit mindestens einem Segment (30), das dazu eingerichtet ist, Licht von einem flächigen Teilbereich (80), in dem sich das Objekt (10) zumindest teil- oder zeitweise befindet und der eine charakteristische Dimension besitzt, die kleiner als die Dimension des Objekts (10) oder seiner Bewegungsbahn ist, zu einer Detektoreinrichtung (123) zu übertragen,
- Detektion der von der strukturierten Maske (20) übertragenen Lichtmenge und Erzeugung eines Detektorsignals, das in einem vorbestimmten Zusammenhang mit der Lichtmenge steht, und
- Auswertung des Detektorsignals in Bezug auf das Vorhandensein des Objekts (10), seine Position, seine Form und/oder die zeitliche Änderung der Position.

2. Verfahren gemäß Anspruch 1, bei dem die Objektdetektion an synthetischen oder biologischen Teilchen (10) in einem Mikrokanal eines fluidischen Mikrosystems durchgeführt wird, in dem das Teilchen hydrodynamischen, akustischen, magnetischen und/oder elektrischen Kräften ausgesetzt ist.

3. Verfahren gemäß Anspruch 2, bei dem die Maske (20) in Bezug auf das Mikrosystem so positioniert ist, daß von der Maske Licht von einem Teilbereich (80) übertragen wird, in dem das Teilchen (10) positioniert oder bewegt werden soll.

4. Verfahren gemäß Anspruch 2, bei dem die Maske (20) in Bezug auf das Mikrosystem so positioniert ist, daß von der Maske Licht von einem Teilbereich (80) übertragen wird, in den das Teilchen (10) nicht eintreten soll.

5. Verfahren gemäß einem der vorhergehenden Ansprüche, bei dem
- zur Erfassung des Vorhandenseins eines ruhenden Teilchens (10) erfaßt wird, ob das Detektorsignal (D1) eine vorbestimmte, unveränderliche Amplitude besitzt,
- zur Erfassung des Vorhandenseins eines bewegten Teilchens (10) an einer bestimmten Position ermittelt wird, ob das Detektorsignal einen vorbestimmten Zeitverlauf besitzt,
- zur Erfassung der Frequenz und Geschwindigkeit von Teilchen (10) Maxima des Detektorsignals in Bezug auf ihre Breite und ihren Abstand ausgewertet werden, und/oder
- zur Zählung von Teilchen (10) die Maxima des Detektorsignals gezählt werden.

6. Verfahren gemäß Anspruch 5, bei dem eine Richtungsbestimmung der Teilchenbewegung und/oder eine größenabhängige Teilchenzählung erfolgt.

7. Verfahren gemäß einem der vorhergehenden Ansprüche, bei dem die Amplitude des Detektorsignals und/oder die Variabilität des Detektorsignals ausgewertet werden.

8. Verfahren gemäß einem der vorhergehenden Ansprüche 2 bis 7, bei dem das Teilchen (10) mit einem Fanglaser gehaltert oder bewegt wird.

9. Verfahren gemäß Anspruch 8, bei dem das Teilchen (10) mit dem Fanglaser (60) mit einer Modifizierungsschicht (55), einer Zelle (56) oder Rezeptoren (57) im Mikrosystem in Berührung gebracht wird und bei der Auswertung des Detektorsignals in Bezug auf die Bewegungseigenschaften des Teilchens (10) Parameter ermittelt werden, die für die Wechselwirkung des Teilchens (10) mit der Modifizierungsschicht (55), der Zelle (56) oder den Rezeptoren (57) charakteristisch sind.

10. Vorrichtung zur Objektdetektion, die umfaßt:
- eine optische Abbildungseinrichtung zur vergrößerten Abbildung mindestens eines ruhenden oder bewegten Objekts (10) auf eine strukturierte Maske (20), die mindestens ein Licht übertragendes Segment (30) besitzt, das dazu eingerichtet ist, Licht von einem flächigen Teilbereich (80), in dem sich das Objekt (10) zumindest teil- oder zeitweise befindet und der eine charakteristische Dimension besitzt, die kleiner als die Dimension des Objekts (10) oder seiner Bewegungsbahn ist, zu einer Detektoreinrichtung (123) zu übertragen,
- eine Detektoreinrichtung (123) zur Erfassung der von der strukturierten Maske (20) übertragenen Lichtmenge und zur Bildung eines Detektorsignals, das in einem vorbestimmten Zusammenhang mit der Lichtmenge steht, und
- eine Auswertungseinrichtung zur Auswertung des Detektorsignals in Bezug auf das Vorhandensein eines Objekts (10), seine Position, seine Form und/oder die zeitliche Änderung der Position.

11. Vorrichtung gemäß Anspruch 10, bei der die optische Abbildungseinrichtung Teil eines Mikroskops ist.

12. Vorrichtung gemäß Anspruch 11, bei dem die Maske (20) im Strahlengang des Mikroskops angeordnet ist.

13. Vorrichtung gemäß einem der Ansprüche 10 bis 12, bei der die Maske (20) eine Transmissionsblende mit mindestens einem transparenten Segment (30) ist.

14. Vorrichtung gemäß Anspruch 13, bei der mehrere Segmente vorgesehen sind, die in der Maskenebene zweidimensional angeordnet sind.

15. Vorrichtung gemäß Anspruch 13 oder 14, bei der kreuzförmige Segmente, rahmenförmige Segmente und/oder gerade oder gekrümmte, streifenförmige Segmente vorgesehen sind.

16. Vorrichtung gemäß einem der Ansprüche 10 bis 15, bei der die Detektoreinrichtung (123) zur summarischen Detektion der von der Maske (20) transmittierten oder reflektierten Teilabbildung des Objekts (10) oder seiner Bewegungsbahn eingerichtet ist.

17. Vorrichtung gemäß einem der Ansprüche 10 bis 16, die zur Objektdetektion an synthetischen oder natürlichen Teilchen (10) in einem fluidischen Mikrosystem eingerichtet ist.

18. Vorrichtung gemäß Anspruch 17, bei dem die Teilchen (10) im Mikrosystem hydrodynamischen akustischen, magnetischen und/oder elektrischen Kräften ausgesetzt sind.

19. Vorrichtung gemäß Anspruch 17 oder 18, bei dem eine Fanglaser-Anordnung (60, 160) zur Manipulierung der Teilchen (10) im Mikrosystem vorgesehen ist.

20. Vorrichtung gemäß einem der Ansprüche 10 bis 19, bei dem das Segment (30) eine charakteristische Dimension besitzt, die kleiner als das Objekt (10) oder seine Bewegungsbahn oder kleiner als die Abbildung des Objekts (10) oder seiner Bewegungsbahn ist.

21. Verfahren gemäß Anspruch 1, mit den Schritten:
- optische Abbildung mindestens eines ruhenden oder bewegten Objekts auf einem CCD-Matrix-Detektor,
- elektronische Maskierung der Signale des CCD-Matrix-Detektors zur Bereitstellung von Signalen von bestimmten Bildpunkten des Objekts, und
- Auswertung dieser Signale von bestimmten Bildpunkten in Bezug auf das Vorhandensein des Objekts, seine Position, seine Form und/oder die zeitliche Änderung der Position.

22. Verwendung eines Verfahrens oder einer Vorrichtung gemäß einem der vorhergehenden Ansprüche zur
- dielektrischen Einzelteilchenspektroskopie in fluidischen Mikrosystemen,
- Messung elektromagnetischer Kräfte in Mikroelektrodenanordnungen,
- Messung optischer Kräfte in Fanglasern,
- Erfassung der Funktion von Mikroelektroden in Mikrosystemen,
- Erfassung von Teilchenpositionen und/oder -bewegungen, Teilchenzahlen und/oder Teilchenwechselwirkungen, und/oder
- Messung von Teilchenrotationen, die durch rotierende elektrische Felder induziert sind.

## Claims

1. Method for object detection, having the steps:
- enlarged optical imaging of at least one static or moving object (10) onto a structured mask (20), having at least one segment (30) which is equipped to transmit to a detector device (123) light from a flat partial region (80) in which the object (10) is located at least partly or temporarily and which has a characteristic dimension which is smaller than the dimension of the object (10) or its movement path,
- detection of the quantity of light transmitted from the structured mask (20) and production of a detector signal which is in a predetermined relationship with the quantity of light, and
- evaluation of the detector signal with respect to the presence of the object (10), its position, its shape and/or the temporal change of the position.

2. Method according to claim 1, in which the object detection is implemented on synthetic or biological particles (10) in a microchannel of a fluid microsystem in which the particle is subjected to hydrodynamic, acoustic, magnetic and/or electrical forces.

3. Method according to claim 2, in which the mask (20) is positioned with respect to the microsystem such that light from a partial region (80) is transmitted from the mask, in which partial region the particle (10) is intended to be positioned or moved.

4. Method according to claim 2, in which the mask (20) is positioned with respect to the microsystem such that light from a partial region (80) is transmitted from the mask, into which partial region the particle (10) is not intended to enter.

5. Method according to one of the preceding claims, in which
- in order to detect the presence of a static particle (10), it is detected whether the detector signal (D1) has a predetermined, unvarying amplitude,
- in order to detect the presence of a moving particle (10) at a specific position, it is determined whether the detector signal has a predetermined time response,
- in order to determine the frequency and speed of particles (10), maxima of the detector signal with respect to their width and their spacing are evaluated, and/or
- in order to count particles (10), the maxima of the detector signal are counted.

6. Method according to claim 5, in which a direction determination of the particle movement and/or a dimension-dependent particle count is effected.

7. Method according to one of the preceding claims, in which the amplitude of the detector signal and/or the variability of the detector signal are evaluated.

8. Method according to one of the preceding claims 2 to 7, in which the particle (10) is mounted or moved by a trapping laser.

9. Method according to claim 8, in which the particle (10) is brought into contact by the trapping laser (60) with a modification layer (55), a cell (56) or receptors (57) in the microsystem and parameters are determined upon evaluation of the detector signal with respect to the movement properties of the particle (10), said parameters being characteristic of the interaction of the particle (10) with the modification layer (55), the cell (56) or the receptors (57).

10. Device for object detection, which comprises:
- an optical imaging device for enlarged imaging of at least one static or moving object (10) onto a structured mask (20) which has at least one light-transmitting segment (30) which is equipped to transmit to a detector device (123) light from a flat partial region (80) in which the object (10) is located at least partly or temporarily and which has a characteristic dimension which is smaller than the dimension of the object (10) or its movement path,
- a detector device (123) for detecting the quantity of light transmitted from the structured mask (20) and for forming a detector signal which is in a predetermined relationship with the quantity of light, and
- an evaluation device for evaluating the detector signal with respect to the presence of an object (10), its position, its shape and/or the temporal change of the position.

11. Device according to claim 10, in which the optical imaging device is part of a microscope.

12. Device according to claim 11, in which the mask (20) is disposed in the beam path of the microscope.

13. Device according to one of the claims 10 to 12, in which the mask (20) is a transmission screen with at least one transparent segment (30).

14. Device according to claim 13 in which a plurality of segments is provided which is disposed two-dimensionally in the mask plane.

15. Device according to claim 13 or 14, in which cruciate segments, frame-shaped segments and/or straight or curved, strip-shaped segments are provided.

16. Device according to one of the claims 10 to 15, in which the detector device (123) is equipped for summary detection of the partial imaging of the object (10) or its movement path which are transmitted or reflected from the mask (20).

17. Device according to one of the claims 10 to 16, which is equipped for object detection of synthetic or natural particles (10) in a fluid microsystem.

18. Device according to claim 17, in which the particles (10) in the microsystem are subjected to hydrodynamic, acoustic, magnetic and/or electrical forces.

19. Device according to claim 17 or 18, in which a trapping laser arrangement (60, 160) is provided for manipulating the particles (10) in the microsystem.

20. Device according to one of the claims 10 to 19, in which the segment (30) has a characteristic dimension which is smaller than the object (10) or its movement path or smaller than the imaging of the object (10) or its movement path.

21. Method according to claim 1, having the steps:
- optical imaging of at least one static or moving object on a CCD matrix detector,
- electronic masking of the signals of the CCD matrix detector for providing signals from specific picture elements of the object, and
- evaluation of these signals from specific picture elements with respect to the presence of the object, its position, its shape and/or the temporal change of the position.

22. Use of a method or a device according to one of the preceding claims for
- dielectric individual particle spectroscopy in fluid microsystems,
- measurement of electromagnetic forces in microelectrode arrangements,
- measurement of optical forces in trapping lasers,
- detection of the function of microelectrodes in microsystems,
- detection of particle positions and/or movements, particle numbers and/or particle interactions, and/or
- measurement of particle rotations which are induced by rotating electrical fields.

## Revendications

1. Procédé de détection d'objets avec les étapes :
- de reproduction optique agrandie d'au moins un objet immobile ou mobile (10) sur un masque structuré (20) avec au moins un segment (30) qui est arrangé afin de transmettre à un dispositif de détection (123) de la lumière provenant d'une zone partielle plane (80) dans laquelle l'objet (10) se trouve au moins partiellement ou temporairement et qui possède une dimension caractéristique qui est inférieure à la dimension de l'objet (10) ou de sa trajectoire de déplacement,
- de détection de la quantité de lumière transmise par le masque structuré (20) et de génération d'un signal de détection qui présente une relation prédéfinie avec la quantité de lumière, et
- d'évaluation du signal de détection en ce qui concerne la présence de l'objet (10), sa position, sa forme et/ou la variation temporelle de la position.

2. Procédé selon la revendication 1, avec lequel la détection de l'objet est exécutée sur des particules synthétiques ou biologiques (10) dans un microcanal d'un microsystème fluide dans lequel la particule est soumise à des forces hydrodynamiques, acoustiques, magnétiques et/ou électriques.

3. Procédé selon la revendication 2, avec lequel le masque (20) est positionné par rapport au microsystème de sorte que le masque transmette de la lumière d'une zone partielle (80) dans laquelle la particule (10) doit être positionnée ou déplacée.

4. Procédé selon la revendication 2, avec lequel le masque (20) est positionné par rapport au microsystème de sorte que le masque transmette de la lumière d'une zone partielle (80) dans laquelle la particule (10) ne doit pas pénétrer.

5. Procédé selon l'une quelconque des revendications précédentes, avec lequel
- pour détecter la présence d'une particule immobile (10) on détecte si le signal de détection (D1) possède une amplitude prédéfinie invariable,
- pour détecter la présence d'une particule mobile (10) à une position définie on détermine si le signal de détection possède une allure temporelle prédéfinie,
- pour détecter la fréquence et la vitesse de particules (10) on évalue des maximums du signal de détection en ce qui concerne sa largeur et son écart, et/ou
- pour compter des particules (10) on compte les maximums du signal de détection.

6. Procédé selon la revendication 5, avec lequel a lieu une détermination de la direction du déplacement des particules et/ou un comptage des particules en fonction de leur taille.

7. Procédé selon l'une quelconque des revendications précédentes, avec lequel on évalue l'amplitude du signal de détection et/ou la variabilité du signal de détection.

8. Procédé selon l'une quelconque des revendications précédentes 2 à 7, avec lequel la particule (10) est maintenue ou déplacée avec une pincette optique laser.

9. Procédé selon la revendication 8, avec lequel, au moyen une pincette optique laser (60), la particule (10) est mise en contact avec une couche de modification (55), une cellule (56) ou des récepteurs (57) dans le microsystème et lors de l'évaluation du signal de détection relativement aux propriétés de déplacement de la particule (10) sont déterminés des paramètres qui sont caractéristiques pour l'interaction de la particule (10) avec la couche de modification (55), la cellule (56) ou les récepteurs (57).

10. Dispositif de détection d'objet qui comprend :
- un dispositif de reproduction optique destiné à la reproduction agrandie d'au moins un objet immobile ou mobile (10) sur un masque structuré (20) qui possède au moins un segment transmettant de la lumière (30) qui est disposé afin de transmettre à un dispositif de détection (123) de la lumière d'une zone partielle plane (80) dans laquelle l'objet (10) se trouve au moins partiellement ou temporairement et qui possède une dimension caractéristique qui est inférieure à la dimension de l'objet (10) ou de sa trajectoire de déplacement,
- un dispositif de détection (123) destiné à détecter la quantité de lumière transmise par le masque structuré (20) et destiné à former un signal de détection qui présente une relation prédéfinie avec la quantité de lumière, et
- un dispositif d'évaluation destiné à évaluer le signal de détection en ce qui concerne la présence d'un objet (10), sa position, sa forme et/ou la modification temporelle de la position.

11. Dispositif selon la revendication 10, avec lequel le dispositif de reproduction optique est une partie d'un microscope.

12. Dispositif selon la revendication 11, avec lequel le masque (20) est disposé dans la trajectoire des rayons du microscope.

13. Dispositif selon l'une quelconque des revendications 10 à 12, avec lequel le masque (20) est un écran de transmission avec au moins un segment transparent (30).

14. Dispositif selon la revendication 13, avec lequel il est prévu plusieurs segments qui sont disposés de manière bidimensionnelle dans le plan du masque.

15. Dispositif selon la revendication 13 ou 14, avec lequel il est prévu des segments en forme de croix, des segments en forme de cadre et/ou des segments droits, courbes ou en forme de strie.

16. Dispositif selon l'une quelconque des revendications précédentes 10 à 15, avec lequel le dispositif de détection (123) est conçu pour la détection par sommation de la reproduction partielle de l'objet (10) ou de sa trajectoire de déplacement, transmise ou réfléchie par le masque (20).

17. Dispositif selon l'une quelconque des revendications précédentes 10 à 16 qui est conçu pour la détection d'objet pour des particules synthétiques ou naturelles (10) dans un microsystème fluide.

18. Dispositif selon la revendication 17, avec lequel les particules (10) dans le microsystème sont soumises à des forces hydrodynamiques, acoustiques, magnétiques et/ou électriques.

19. Dispositif selon la revendication 17 ou 18, avec lequel il est prévu un arrangement à pincette optique laser (60, 160) pour manipuler les particules (10) dans le microsystème.

20. Dispositif selon l'une quelconque des revendications précédentes 10 à 19, avec lequel le segment (30) possède une dimension caractéristique qui est inférieure à l'objet (10) ou à sa trajectoire de déplacement ou inférieure à la reproduction de l'objet (10) ou de sa trajectoire de déplacement.

21. Dispositif selon la revendication 1, avec les étapes :
- de reproduction optique d'au moins un objet immobile ou mobile sur un détecteur à matrice avec dispositif à transfert de charge,
- de masquage électronique des signaux du détecteur à matrice avec dispositif à transfert de charge pour fournir des signaux de pixels définis de l'objet, et
- d'évaluation de ces signaux de pixels définis en ce qui concerne la présence de l'objet, sa position, sa forme et/ou la variation de la position.

22. Emploi d'un procédé ou d'un dispositif selon l'une quelconque des revendications précédente destiné à
- la spectroscopie diélectrique de particules individuelles dans des microsystèmes fluides,
- la mesure de forces électromagnétiques dans des agencements de microélectrodes.
- la mesure de forces optiques dans des pincettes optiques lasers,
- la détection de la fonction de microélectrodes dans des microsystèmes,
- la détection de la position et/ou du déplacement de particules, du nombre de particules et/ou d'interactions de particules, et/ou
- la mesure de rotations de particules qui sont induites par des champs électriques tournants.
